# EUROPEAN PATENT APPLICATION

(11) **EP 4 552 538 A1**
(43) Date of publication of application: **14.05.2025**
(21) Application number: 24209189.0
(22) Date of filing: 28.10.2024
(51) Int. Cl.: A47G 33/12, E04H 12/22, A47G 33/06

(54) **FOLDABLE SUPPORT DEVICE AND ARTIFICIAL TREE**

(30) Priority: 13.11.2023 CN 202311514390
(71) Applicant: Dongguan Polyfilm Plastic Products Company Limited, Dong Guan City, Guang Dong Province 523000 (CN)
(72) Inventor: LIANG, Berlin, Dong Guan City, Guang Dong Province 523000 (CN); LIN, Zhongyan, Dong Guan City, Guang Dong Province 523000 (CN)
(74) Representative: Pinsent Masons LLP

(57) **Abstract**

Embodiments of the present disclosure provide a foldable support device and an artificial tree. The support device includes a support seat, a support assembly, and an unfold and fold mechanism. The support seat is provided with an accommodating cavity and a mounting portion configured to mount a supported object. The accommodating cavity extends along a direction parallel to a first direction. An outer side surface of the support seat is provided with a pivot portion. The support assembly is pivotally connected to the pivot portion and has an unfold position and a fold position. The unfold and fold mechanism is drivingly connected to the support assembly. The unfold and fold mechanism is at least partially accommodated in the accommodating cavity and is movable along the first direction. The unfold and fold mechanism is capable of switching between a first state and a second state to drive the support assembly to switch between the unfold position and the fold position, when the unfold and fold mechanism is in the first state, the support assembly is held at the unfold position, and when the unfold and fold mechanism is in the second state, the support assembly is held at the fold position.

## Description

### TECHNICAL FIELD

The present disclosure relates to the technical field of support device structures for support, and in particular, to an artificial tree and a foldable support device thereof.

### BACKGROUND

As a support structural member used with a column, a support device is widely used in industrial production and daily life. An existing support device generally has a radial fixed structure. With this structure, the support device is very bulky when stored or transported, which has problems of inconvenient transportation and carrying and easy breakage.

### SUMMARY

Accordingly, there is a need to provide a foldable support device and an artificial tree having the support device with respect to the above technical problems.

According to an aspect of the present disclosure, a foldable support device is provided. The support device includes a support seat, a support assembly, and an unfold and fold mechanism.

The support seat is provided with an accommodating cavity and a mounting portion configured to mount a supported object. The accommodating cavity extends along a direction parallel to a first direction. An outer side surface of the support seat is provided with a pivot portion.

The support assembly is pivotally connected to the pivot portion and has an unfold position and a fold position.

The unfold and fold mechanism is drivingly connected to the support assembly. The unfold and fold mechanism is at least partially accommodated in the accommodating cavity and is movable along the first direction.

The unfold and fold mechanism is capable of switching between a first state and a second state to drive the support assembly to switch between the unfold position and the fold position, when the unfold and fold mechanism is in the first state, the support assembly is held at the unfold position, and when the unfold and fold mechanism is in the second state, the support assembly is held at the fold position.

Further, the support seat is provided with an engaging hole, the engaging hole passing through a side wall of the accommodating cavity, and the unfold and fold mechanism includes: a movable seat, a first locking member, and a second locking member.

The movable seat is drivingly connected to the support assembly. The movable seat is movably arranged in the accommodating cavity and has a first position and a second position.

The first locking member has a first engaging end. The first locking member is movably arranged on the movable seat and has a first lock position allowing the first engaging end to be engaged with the engaging hole and a first unlock position allowing the first engaging end to be disengaged from the engaging hole.

The second locking member has a second engaging end. The second locking member is movably arranged on the movable seat and has a second lock position allowing the second engaging end to be engaged with the engaging hole and a second unlock position allowing the second engaging end to be disengaged from the engaging hole.

When the movable seat is at the first position, the unfold and fold mechanism is in the first state, and the first locking member is at the first lock position to allow the support assembly to be held at the unfold position; and when the movable seat is at the second position, the unfold and fold mechanism is in the second state, and the second locking member is at the second lock position to allow the support assembly to be held at the fold position.

Further, the movable seat is provided with a first receiving cavity, the first receiving cavity having a first open end, the first open end being provided with a first cover body, the first cover body closing at least part of the first open end, and the unfold and fold mechanism further includes a driving member.

The driving member is at least partially accommodated in the first receiving cavity and is movable along a direction parallel to the first direction relative to the movable seat. The driving member has a first drive position and a second drive position.

When the driving member is at the first drive position, the first engaging end of the first locking member is capable of being engaged with the engaging hole, so that the movable seat is held at the first position, and the support assembly is held at the unfold position; and when the driving member is at the second drive position, the driving member is capable of driving, through the first locking member, the movable seat to move from the second position to the first position, and is capable of pushing against the first cover body to drive the movable seat to move from the first position to the second position.

Further, the movable seat is provided with a first penetration hole, the first penetration hole passing through a side wall of the first receiving cavity, and the first locking member is arranged through the first penetration hole and is movable along a direction parallel to a second direction relative to the movable seat, wherein the second direction is not parallel to the first direction, and
one of the first locking member and the driving member is provided with a first driving bevel, and the other of the first locking member and the driving member is provided with a second driving bevel, the second driving bevel abutting against the first driving bevel and being slidable relative to the first driving bevel to allow the first locking member to be movable between the first lock position and the first unlock position along the second direction relative to the movable seat when the driving member moves along the first direction relative to the movable seat.

Further, one of an end of the first locking member away from the first engaging end and a side surface of the driving member is provided with a driving protrusion, the first driving bevel being formed on the side surface of the driving protrusion; and
the other of the end of the first locking member away from the first engaging end and the side surface of the driving member is provided with a driving recess, an extension direction of the driving recess is not parallel to either the first direction or the second direction, and the second driving bevel is formed on a bottom wall of sthe driving recess;
the driving protrusion being engaged with the driving recess and movable along the extension direction of the driving recess.

Further, the first locking member includes a pin-shaped first bayonet portion, the first engaging end is formed at one end of the first bayonet portion, and an outer side surface of the first bayonet portion is provided with a first limiting protrusion, the first limiting protrusion being capable of abutting against an end face of the first penetration hole to limit at least part of the first locking member in the first receiving cavity.

Further, the driving member includes a driving main body and a limiting boss, the driving main body having a first end portion and a second end portion and gradually diminishing from the first end portion to the second end portion, the limiting boss being arranged on the first end portion of the driving main body, and the driving member is movable between the first drive position and the second drive position relative to the movable seat, and
when the movable seat is at the first drive position, an end of the first locking member away from the first engaging end abuts against a side surface of the first end portion, and a side surface of the first locking member is capable of being stopped by the limiting boss; and when the movable seat is at the second drive position, the end of the first locking member away from the first engaging end abuts against a side surface of the second end portion, and the first end portion abuts against the first cover body.

Further, the unfold and fold mechanism further includes:
a first reset member arranged between the first locking member and the movable seat, the first reset member being adapted to bias the first locking member to cause the first locking member to move towards the first unlock position.

Further, the first locking member includes a first bayonet portion and an abutting portion, and the first engaging end is formed at one end of the first bayonet portion, the abutting portion being connected to an outer side surface of the first bayonet portion,
the movable seat is provided with a first penetration hole and a limiting recess, the first penetration hole passing through a side wall of the first receiving cavity, the limiting recess being adjacent to the first penetration hole and located in the first receiving cavity, the first bayonet portion being inserted into the first penetration hole, and the abutting portion being at least partially accommodated in the limiting recess, and
one end of the first reset member abuts against a bottom wall of the limiting recess, and the other end of the first reset member abuts against the abutting portion.

Further, the unfold and fold mechanism further includes: an operating member.

The operating member is operably arranged on the movable seat and detachably connected to the driving member through a first connecting member.

Further, the first cover body is provided with a connecting perforation and a penetration recess, the operating member has an operating portion, the operating portion being located outside the first receiving cavity, and at least part of the operating member is capable of extending into the first receiving cavity through the penetration recess.

One end of the first connecting member is detachably connected to the operating member, and the other end of the first connecting member passes through the connecting perforation and is detachably connected to the driving member.

Further, the operating member is provided with a gasket, the gasket being arranged on the operating portion.

Further, the unfold and fold mechanism further includes a driving reset member, the driving reset member being arranged between the first cover body and the driving member to bias the driving member to cause the driving member to move towards the first drive position.

Further, an end of the driving member facing the first cover body is provided with a limiting slot, the limiting slot being provided with a limiting post, and the first cover body has a boss portion, the boss portion being provided with a limiting groove, and
one end of the driving reset member sleeves the limiting post, and the other end of the driving reset member is inserted into the limiting groove.

Further, the driving member is provided with a guide hole, an extension direction of the guide hole is parallel to the first direction, and the movable seat is provided with a guide member, the guide member extending along a direction parallel to the first direction, and the guide member being inserted into the guide hole and movable along the guide hole.

Further, the movable seat includes: a first base and a second base.

The first base is provided with a first receiving cavity, and the first locking member is movably arranged on the first base.

The second base is detachably connected to the first base, the second base is provided with a second receiving cavity, the second receiving cavity is in communication with the first receiving cavity, and the second locking member is movably arranged on the second base.

Further, the second base is provided with a receiving groove and a second penetration hole, the second penetration hole passing through a side wall of the receiving groove, and an open end of the receiving groove is provided with a second cover body, the second cover body being detachably connected to the second base, and
the second locking member is movably arranged in the receiving groove and the second engaging end is capable of at least partially passing through the second penetration hole and extending out of the receiving groove, to allow the second engaging end to be engaged with the engaging hole.

Further, the second locking member includes a second bayonet portion and a second limiting protrusion, the second bayonet portion being in a shape of a pin, and the second engaging end is formed at one end of the second bayonet portion, the second limiting protrusion being arranged on an outer side surface of the second bayonet portion, and
the second limiting protrusion is capable of being stopped by an end face of the second penetration hole, to limit at least part of the second locking member in the receiving groove.

Further, the receiving groove is provided with a connecting protrusion, and the unfold and fold mechanism further includes:
a second reset member, the second reset member being arranged between the second locking member and the connecting protrusion, and the second reset member being adapted to bias the second locking member to cause the second locking member to move towards the second lock position.

Further, the unfold and fold mechanism includes:
a movable seat at least partially accommodated in the accommodating cavity and movable along a direction parallel to the first direction relative to the support seat, the movable seat being provided with a plurality of first meshing teeth,
the support assembly is provided with a plurality of second meshing teeth, and the support seat is provided with a meshing hole, the meshing hole passing through a side wall of the accommodating cavity, and
when the movable seat moves along the direction parallel to the first direction relative to the support seat, the first meshing teeth are capable of meshing with the second meshing teeth through the meshing hole to drive the support assembly to pivot between the unfold position and the fold position.

Further, the plurality of first meshing teeth are distributed on an outer side surface of the movable seat along a direction parallel to the first direction.

Further, the support assembly includes: a gear plate and a support body.

The gear plate is provided with the plurality of second meshing teeth and pivotally connected to the pivot portion. The plurality of second meshing teeth mesh with the plurality of first meshing teeth.

The support body is connected to the gear plate.

Further, the pivot portion is provided with a retaining groove, the retaining groove being in communication with the meshing hole, and at least part of the gear plate is accommodated in the retaining groove and is pivotally connected to the pivot portion.

Further, the pivot portion is provided with a decorative member.

One of the decorative member and the support body is provided with an engaging protrusion, the other of the decorative member and the support body is provided with an engaging recess, and when the support assembly is at the fold position, the engaging protrusion is engaged with the engaging recess.

Further, the pivot portion is provided with a first pivot limiting portion, and when the support assembly is at the unfold position, at least part of the support assembly abuts against the first pivot limiting portion.

The decorative member is provided with a second pivot limiting portion, and when the support assembly is at the fold position, at least part of the support assembly abuts against the second pivot limiting portion.

Further, the support assembly further includes a pad having a support surface, the pad being detachably arranged at an end of the support body away from the gear plate.

Further, at least two support assemblies are provided, the support seat is provided with at least two pivot portions, and the at least two support assemblies are respectively pivotally connected to the at least two pivot portions.

According to another aspect of the present disclosure, an artificial tree is provided. The artificial tree includes a tree body and the support device in any one of the above embodiments. The tree body serves as the supported object and being mounted on the mounting portion.

According to the support device and the artificial tree provided with the support device provided in embodiments of the present disclosure, the unfold and fold mechanism thereof is movably arranged on the support seat and is drivingly connected to the support assembly, so that, the unfold and fold mechanism can switch between the first state and the second state when moving relative to the support seat, thereby driving the support assembly to pivot between the unfold position and the fold position. Further, when the unfold and fold mechanism is in the first state, the support assembly is held at the unfold position, so that the support assembly can be firmly supported on the ground or a platform. When the unfold and fold mechanism is in the second state, the support assembly is held at the fold position, which reduces a space occupied by the support device to facilitate storage or transportation of the support device. The support device can be easily unfolded and folded to meet use requirements for the support device in different scenarios.

### BRIEF DESCRIPTION OF THE DRAWINGS

The accompanying drawings forming part of the present disclosure are intended to provide further understanding of the present disclosure. Exemplary embodiments of the present disclosure and descriptions thereof are intended to explain the present disclosure, and do not constitute any inappropriate limitation on the present disclosure.

In order to more clearly illustrate the technical solutions in embodiments of the present disclosure or the prior art, the accompanying drawings used in the description of the embodiments or the prior art will be briefly introduced below. It is apparent that, the accompanying drawings in the following description are only some embodiments of the present disclosure, and other accompanying drawings can be obtained by those of ordinary skill in the art from the provided accompanying drawings without creative efforts.

In addition, the accompanying drawings are not drawn to 1: 1 scale, and relative sizes of various elements in the accompanying drawings are drawn by way of examples only and not necessarily to true scale. In the drawings,
FIG. 1 is a schematic structural diagram of a foldable support device according to some embodiments of the present disclosure, in which the support device is in an unfolded state;
FIG. 2 is a schematic structural diagram when the support device in FIG. 1 is in a folded state;
FIG. 3 is an exploded view of the support device in FIG. 1;
FIG. 4 is a sectional view of the support device in FIG. 1, in which a support assembly is at an unfold position, a driving member is at a first drive position, and a first locking member is at a lock position;
FIG. 5 is an enlarged view of A in FIG. 4;
FIG. 6 is a sectional view of the support device in FIG. 1, in which the support assembly is at the unfold position, the driving member is at a second drive position, and the first locking member is at an unlock position;
FIG. 7 is an enlarged view of B in FIG. 6;
FIG. 8 is a sectional view of the support device in FIG. 1, in which the support assembly is at a fold position, the driving member is at the second drive position, and the first locking member is at the unlock position;
FIG. 9 is an enlarged view of C in FIG. 8;
FIG. 10 is a schematic structural diagram of an unfold and fold mechanism according to some embodiments of the present disclosure;
FIG. 11 is a top view of the unfold and fold mechanism in FIG. 10;
FIG. 12 is a sectional view of U1-U1 in FIG. 11;
FIG. 13 is a sectional view of U2-U2 in FIG. 11;
FIG. 14 is an exploded view of the unfold and fold mechanism in FIG. 11;

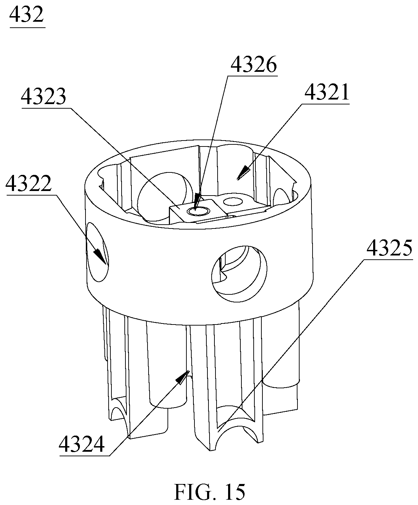

FIG. 15 is a schematic structural diagram of a second base of the unfold and fold mechanism in FIG. 11;
FIG. 16 is a schematic structural diagram of a second cover body of the unfold and fold mechanism in FIG. 11;
FIG. 17 is a schematic structural diagram of a first locking member of the unfold and fold mechanism in FIG. 11; and
FIG. 18 is a schematic structural diagram of a driving member of the unfold and fold mechanism in FIG. 11.

### Reference signs:

100: support device,
1: support seat, 11: first pillar, 11a: pillar body, 11b: insertion portion, 111: accommodating cavity, 112: engaging hole, 113: meshing hole, 12: second pillar, 121: mounting portion, 122: connecting portion, 13: pivot portion, 131: retaining groove, 132: first pivot limiting portion, 14: decorative member, 141: engaging protrusion, 142: second pivot limiting portion,
3: support assembly, 31: support body, 311: side plate portion, 312: connecting plate portion, 313: engaging recess, 32: gear plate, 321: second meshing tooth, 33: pad, 331: support surface, 34a: first connecting pin, 34b: second connecting pin,
4: unfold and fold mechanism,
41: first locking member, 411: first bayonet portion, 4111: first engaging end, 412: driving protrusion, 4121: first driving bevel, 413: first limiting protrusion, 414: abutting portion, 415: first abutting boss,
42: second locking member, 421: second bayonet portion, 4211: second engaging end, 422: second limiting protrusion, 423: abutting recess,
43: movable seat, 4301: first meshing tooth, 4302: limiting recess, 4303: guide member,
431: first base, 4311: first receiving cavity, 4312: first penetration hole, 4313: first limiting portion, 4314: second open end, 4315: first open end,
432: second base, 4321: receiving groove, 4322: second penetration hole, 4323: connecting protrusion, 4324: second receiving cavity, 4325: second limiting portion, 4326: threaded hole, 4327: second abutting boss,
433: first cover body, 4331: boss portion, 4332: limiting groove, 4333: connecting perforation, 4334: penetration recess,
434: second cover body, 4341: covering portion, 4342: cover body connecting portion,
44: driving member, 441: driving main body, 4411: first end portion, 4412: second end portion, 4413: driving recess, 4414: second driving bevel, 442: limiting boss, 443: limiting slot, 444: limiting post, 445: guide hole, 446: insertion recess,
45: operating member, 451: operating portion, 452: operating connecting portion,
46: gasket, 47a: first reset member, 47b: second reset member, 47c: driving reset member, 49: first connecting member,
D1: first direction, D2: second direction.

### DETAILED DESCRIPTION OF THE EMBODIMENTS

In order to facilitate understanding of the present disclosure, a more comprehensive description of the present disclosure is given below with reference to the accompanying drawings. Preferred embodiments of the present disclosure are given in the accompanying drawings. However, the present disclosure may be implemented in many different forms and is not limited to the embodiments described herein. Rather, these embodiments are provided to make the contents disclosed in the present disclosure more thoroughly and fully understood.

It is to be noted that, when one element is considered to be "connected to" another element, it may be directly connected to and integrated with the another element or an intermediate element may co-exist. The terms "first port", "first transport port", "another end", and similar expressions used herein are for illustrative purposes only.

Unless defined otherwise, all technical and scientific terms used herein have the same meanings as would generally understood by those skilled in the technical field of the present disclosure. The terms used herein in the specification of the present disclosure are for the purpose of describing specific embodiments only, and are not intended to limit the present disclosure. The term "and/or" used herein includes any and all combinations of one or more related listed items.

In order to make the objectives, technical solutions, and advantages of the present disclosure clearer, the present disclosure will be further described in detail below with reference to the accompanying drawings and embodiments. It is to be understood that the specific embodiments described herein are intended only to explain the present disclosure and are not intended to limit the present disclosure.

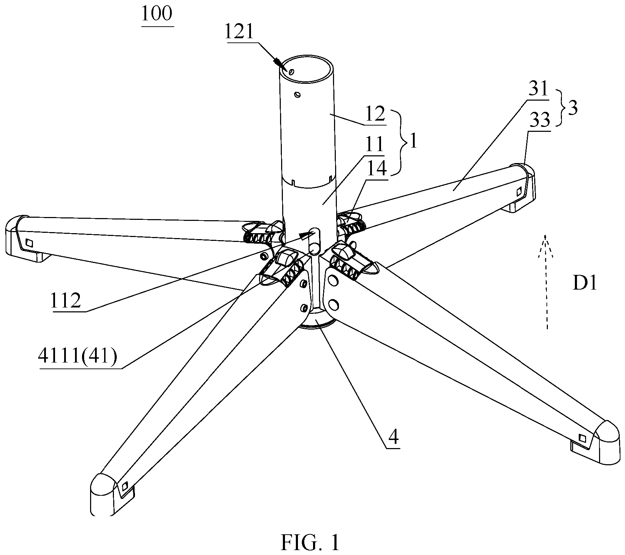

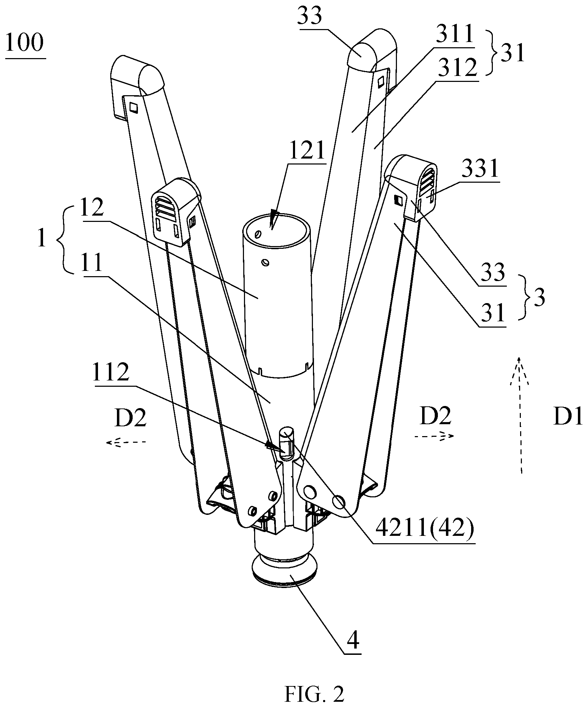

FIG. 1 to FIG. 2 are schematic structural diagrams of a foldable support device 100 according to some embodiments of the present disclosure. The support device 100 can switch between an unfolded state and a folded state. When the support device 100 is in the unfolded state, the support device 100 may be configured to, for example, support a supported object such as an artificial tree or a bulletin board, so that the supported object can be stably placed on the ground or a platform. When the support device 100 is in the folded state, the support device 100 occupies a minimum space, thereby facilitating transfer and storage. According to some embodiments of the present disclosure, an artificial tree is further provided. The artificial tree includes a tree body (not shown) and the support device 100. The tree body is detachably mounted on the support device 100. In the following, the artificial tree will be described together with the support device 100.

As shown in FIG. 1 to FIG. 4, in some embodiments, the support device 100 includes a support seat 1, a support assembly 3, and an unfold and fold mechanism 4. The support assembly 3 is pivotally connected to the support seat 1 and has an unfold position and a fold position. When the support assembly 3 is at the unfold position, the support device 100 is in the unfolded state, an angle between the support assembly 3 and the support seat 1 is maximum, and an overall width of the support device 100 is relatively large (which occupies a relatively large space laterally), so that the support device 100 can be stably supported and the artificial tree can be stably supported on the ground or the platform to prevent tipping. When the support assembly 3 is at the fold position, the support device 100 is in the folded state, the angle between the support assembly 3 and the support seat 1 is minimum, and the overall width of the support device 100 is relatively small (which occupies a relatively small space laterally). Therefore, during transfer or storage of the support device 100, a large amount of transportation or storage space can be saved, which facilitates transfer and storage. The unfold and fold mechanism 4 is operably arranged on the support seat 1 and is drivingly connected to the support assembly 3, to allow driving, through the unfold and fold mechanism 4, the support assembly 3 to switch between the unfold position and the fold position. Further, the unfold and fold mechanism 4 is movably arranged on the support seat 1, and can switch between a first state and a second state, to drive the support assembly 3 to switch between the unfold position and the fold position. When the unfold and fold mechanism is in the first state, the support assembly 3 is held at the unfold position, and the support device 100 is kept in the unfolded state. When the unfold and fold mechanism is in the second state, the support assembly 3 is held at the fold position, and the support device 100 is kept in the folded state.

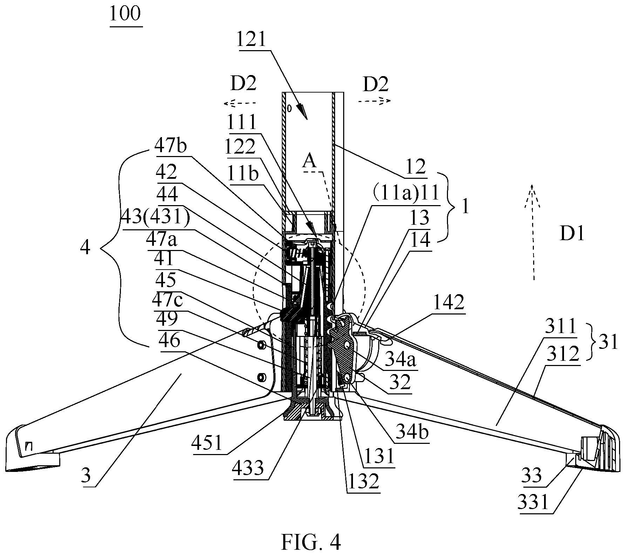

As shown in FIG. 4 to FIG. 9, the support seat 1 is provided with an accommodating cavity 111, a pivot portion 13, and a mounting portion 121 configured to mount the supported object. The tree body (not shown) serves as the supported object and can be mounted on the mounting portion 121. The support seat 1 is provided with the pivot portion 13. The pivot portion 13 is configured to be pivotally connected to the support assembly 3. The accommodating cavity 111 extends a direction parallel to a first direction D1, that is, extends along a longitudinal direction of the support seat 1. The unfold and fold mechanism 4 is at least partially accommodated in the accommodating cavity 111 and can move along an extension direction of the accommodating cavity 111.

As shown in FIG. 1 to FIG. 4, in some embodiments, an outer contour of the support seat 1 is substantially in a shape of a pillar. The support seat 1 includes a first pillar 11 with a hollow inner cavity and a second pillar 12 with a hollow inner cavity. The first pillar 11 and the second pillar 12 are insert-fitted. Specifically, the first pillar 11 includes a pillar body 11a and an insertion portion 11b arranged at one end of the pillar body 11a, the hollow inner cavity of the second pillar 12 is provided with a connecting portion 122, and the insertion portion 11b is inserted into the hollow inner cavity of the second pillar 12 and is connected to the connecting portion 122. More specifically, the insertion portion 11b abuts against the connecting portion 122, and an end face of the second pillar 12 abuts against the pillar body 11a. In this embodiment, as shown in FIG. 4, the hollow inner cavity of the pillar body 11a of the first pillar 11 forms the accommodating cavity 111, the insertion portion 11b at least partially forms a top wall of the accommodating cavity 111, an end of the accommodating cavity 111 opposite to the top wall is an open end, and the unfold and fold mechanism 4 can be mounted in the accommodating cavity 111 of the first pillar 11 through the open end. The hollow inner cavity of the second pillar 12 forms the mounting portion 121, the mounting portion 121 is, for example, a hole for inserting the supported object, and the connecting portion 122 at least partially forms a bottom wall of the hole. In other embodiments, the mounting portion 121 may be a connecting thread provided on the second pillar 12 or the like, and the supported object may be detachably connected to the second pillar 12 through, for example, a threaded connection, which is not limited in the present disclosure.

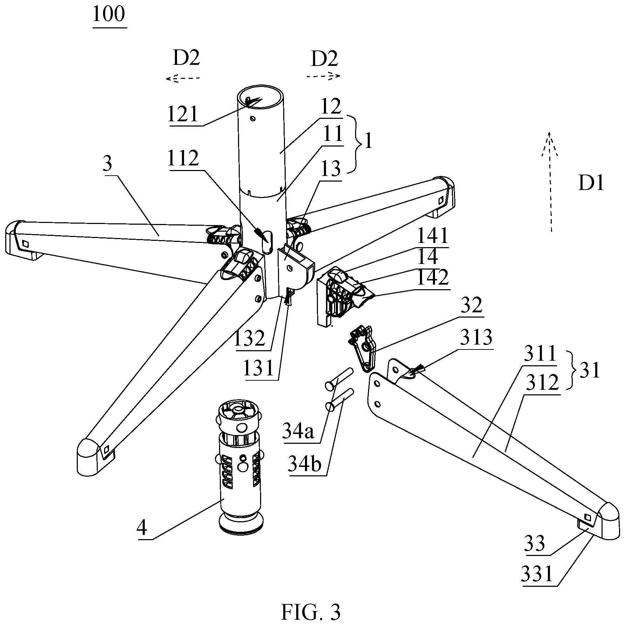

Further, the pivot portion 13 is arranged on an outer side surface of the first pillar 11. The pivot portion 13 may be formed as an integral component with the first pillar 11, or may be fixedly connected to the first pillar 11 by, for example, adhesion or riveting, or may be detachably connected to the first pillar 11 by, for example, clamping or a bolt connecting member, which is not limited in the present disclosure. Referring to FIG. 3 and FIG. 4, the pivot portion 13 is provided with a retaining groove 131, and the retaining groove 131 is configured to accommodate at least part of the support assembly 3. The first pillar 11 of the support seat 1 is provided with a meshing hole 113, and the meshing hole 113 passes through a side wall of the accommodating cavity 111. The retaining groove 131 is in communication with the accommodating cavity 111 through the meshing hole 113, to allow the support assembly 3 to be drivingly connected to the unfold and fold mechanism 4 accommodated in the accommodating cavity 111. The pivot portion 13 is further provided with a first pivot limiting portion 132. The first pivot limiting portion 132 is configured to limit a pivot range of the support assembly 3 relative to the pivot portion 13. Specifically, the first pivot limiting portion 132 can define a maximum angle between the support assembly 3 and the first pillar 11 (i.e., and the support seat 1).

Still referring to FIG. 1 to FIG. 4, the support seat 1 is further provided with a decorative member 14. The decorative member 14 is detachably connected to the pivot portion 13. The decorative member 14 covers the pivot portion 13, so that an appearance of the support device 100 is more beautiful. The decorative member 14 is provided with a second pivot limiting portion 142. The second pivot limiting portion 142 is configured to limit a pivot range of the support assembly 3 relative to the pivot portion 13. Specifically, the second pivot limiting portion 142 can define a minimum angle between the support assembly 3 and the first pillar 11 (i.e., and the support seat 1). Certainly, in some other embodiments, the decorative member 14 may not be provided, which is not limited in the present disclosure.

As shown in FIG. 1 to FIG. 4, in some embodiments, the support device 100 is provided with at least two support assemblies 3. The support seat 1 is provided with at least two pivot portions 13. The at least two support assemblies 3 are respectively pivotally connected to the at least two pivot portions 13. In this embodiment, four support assemblies 3 are provided, the support seat 1 is correspondingly provided with four pivot portions 13, and the four pivot portions 13 are circumferentially spaced apart and evenly arranged around an outer surface of the support seat 1 to improve stability when supported on the ground (or the platform). Certainly, in some other embodiments not shown, the numbers of the support assembly 3 and the pivot portion 13 may alternatively be set to more than four or less than four according to an actual requirement, which is not limited in the present disclosure. For ease of description, one of the support assemblies 3 is taken as an example for illustration below.

As shown in FIG. 1 to FIG. 4, in some embodiments, the support assembly 3 includes a support body 31, a gear plate 32, and a pad 33. The gear plate 32 is pivotably connected to the pivot portion 13 and is drivingly connected to the unfold and fold mechanism 4. Specifically, the gear plate 32 is at least partially accommodated in the retaining groove 131 and is pivotally connected to the pivot portion 13 through a first connecting pin 34a, to allow the gear plate 32 to be drivingly connected to the unfold and fold mechanism 4 through the meshing hole 113. The driving connection between the gear plate 32 and the unfold and fold mechanism 4 will be described in detail below, which is not described in detail again herein.

Further, one end of the support body 31 is connected to the gear plate 32, so that the gear plate 32, when pivoting relative to the pivot portion 13, can drive the support body 31 to pivot relative to the pivot portion 13 (i.e., relative to the support seat 1), thereby enabling the support assembly 3 to switch between the unfold position and the fold position. Specifically, the support body 31 includes two side plate portions 311 arranged opposite to each other and a connecting plate portion 312 connected between the two side plate portions 311. The two side plate portions 311 are connected to the support body 31 and the pivot portion 13 through the first connecting pin 34a and are connected to the gear plate 32 through a second connecting pin 34b. More specifically, part of the gear plate 32 extends out of the retaining groove 131, the second connecting pin 34b passes through the part of the gear plate 32 outside the retaining groove 131 and is connected to the two side plate portions 311 of the support body 31, and the first connecting pin 34a passes through the gear plate 32, the pivot portion 13, and the decorative member 14 and is connected to the two side plate portions 311 of the support body 31. The second connecting pin 34b is pivotable relative to the pivot portion 13 around the first connecting pin 34a. The support body 31 is provided with an engaging recess 313. Specifically, the engaging recess 313 is arranged on the connecting plate portion 312. The decorative member 14 is provided with an engaging protrusion 141. When the support assembly 3 is at the fold position, the engaging protrusion 141 is engaged with the engaging recess 313. Certainly, in other embodiments, alternatively, the support body 31 may be provided with the engaging protrusion 141, and the decorative member 14 is provided with the engaging recess 313, which is not limited in the present disclosure.

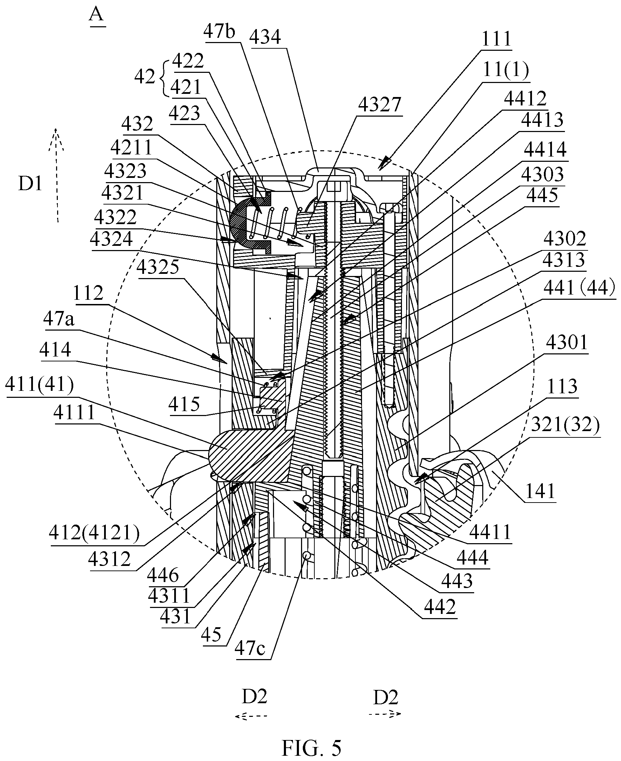

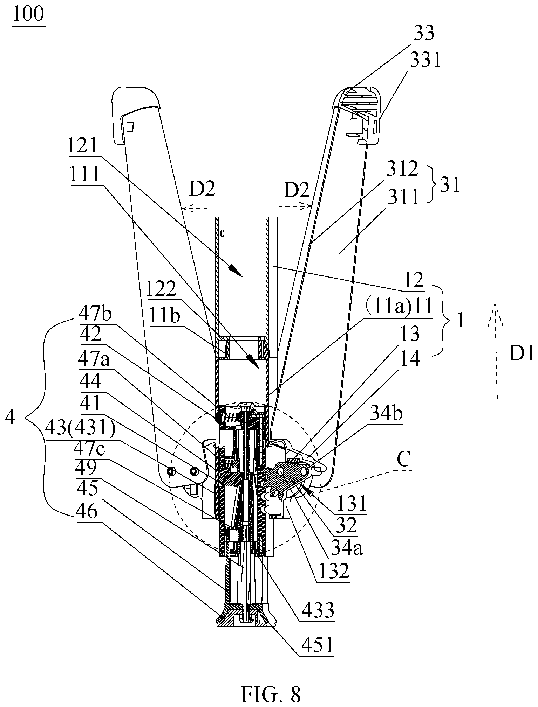

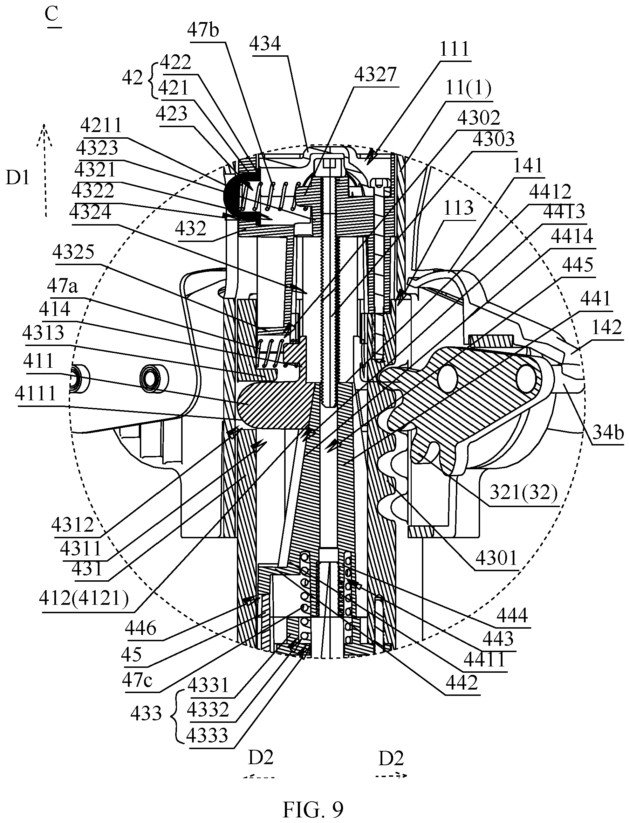

Referring to FIG. 4 and FIG. 5, when the support assembly 3 is at the unfold position, the second connecting pin 34b of the support assembly 3 abuts against the first pivot limiting portion 132, so that the support assembly 3 cannot pivot in a direction away from the second pillar 12, thereby limiting a maximum angle between the support assembly 3 (i.e., the support body 31) and the support seat 1 (i.e., the first pillar 11) and limiting a position of the unfold and fold mechanism 4 in the first state relative to the support seat 1. Referring to FIG. 8 and FIG. 9, when the support assembly 3 is at the fold position, the second connecting pin 34b of the support assembly 3 abuts against the second pivot limiting portion 142, so that the support assembly 3 cannot pivot in a direction close to the second pillar 12, thereby limiting a minimum angle between the support assembly 3 (i.e., the support body 31) and the support seat 1 (i.e., the first pillar 11) and limiting a position of the unfold and fold mechanism 4 in the second state relative to the support seat 1.

As shown in FIG. 1 to FIG. 4, the other end of the support body 31 (i.e., an end of the support body 31 away from the gear plate 32) is provided with the pad 33. The pad 33 is detachably connected to the support body 31. The pad 33 has a support surface 331. A plane where the support surface 331 is located intersects with a plane where the ground or a bottom edge of the support body 31 is located. When the support assembly 3 is at the unfold position, the support surface 331 can be fitted to or parallel to the ground (or the platform). In this way, when the support assembly 3 is at the unfold position, the support surfaces 331 of the four support assemblies 3 can form surface contact with the ground (or the platform), so that the support device 100 can support the supported object on the ground (or the platform) more stably.

As can be seen from the above, the unfold and fold mechanism 4 is movably arranged on the support seat 1. Referring to FIG. 4 to FIG. 9, the support seat 1 has an engaging hole 112. The engaging hole 112 is configured for engagement of the unfold and fold mechanism 4, to maintain the support device 100 in the folded state or the unfolded state. The engaging hole 112 is arranged in the first pillar 11 and passes through the side wall of the accommodating cavity 111. Specifically, the engaging hole 112 is a strip hole, and an extension direction of the engaging hole 112 is substantially parallel to the first direction D1.

As shown in FIG. 4 to FIG. 9, in some embodiments, the unfold and fold mechanism 4 includes a first locking member 41, a second locking member 42, a movable seat 43, a driving member 44, and an operating member 45. The first locking member 41 is movably arranged on the movable seat 43 and has a first engaging end 4111. The second locking member 42 is movably arranged on the movable seat 43 and has a second engaging end 4211. The movable seat 43 is movably arranged in the accommodating cavity 111 and has a first position and a second position. When the movable seat 43 is at the first position, the unfold and fold mechanism 4 is in the first state, and the first engaging end 4111 of the first locking member 41 can be engaged with the engaging hole 112 to maintain the support assembly 3 in the unfolded state. When the movable seat 43 is at the second position, the unfold and fold mechanism 4 is in the second state, and the second engaging end 4211 of the second locking member 42 can be engaged with the engaging hole 112 to hold the support assembly 3 at the fold position. The driving member 44 is movably arranged on the movable seat 43 and is drivingly connected to the first locking member 41. The operating member 45 is operably arranged on the movable seat 43 and is drivingly connected to the driving member 44, to allow driving the driving member 44 to move when the operating member 45 is operated.

As shown in FIG. 4 to FIG. 9, the movable seat 43 is drivingly connected to the support assembly 3, so that, when the movable seat 43 moves between the first position and the second position, the support assembly 3 can be driven to pivot between the unfold position and the fold position. The movable seat 43 is provided with a plurality of first meshing teeth 4301. The support assembly 3 is provided with a plurality of second meshing teeth 321 adapted to mesh with the first meshing teeth 4301. Specifically, the gear plate 32 is provided with the plurality of second meshing teeth 321. The support seat 1 is provided with a meshing hole 113, and the meshing hole 113 passes through the side wall of the accommodating cavity 111. The meshing hole 113 is configured to allow the second meshing teeth 321 or the first meshing teeth 4301 to pass, to allow the first meshing teeth 4301 to mesh with the second meshing teeth 321. In this embodiment, the second meshing teeth 321 of the gear plate 32 pass through the meshing hole 113 and mesh with the first meshing teeth 4301. When the movable seat 43 moves along the direction parallel to the first direction D1 relative to the support seat 1, the first meshing teeth 4301 are capable of meshing with the second meshing teeth 321 through the meshing hole 113 to drive the gear plate 32 to pivot relative to the pivot portion 13, thereby driving the support body 31 to pivot relative to the pivot portion 13 and then driving the support assembly 3 to pivot between the unfold position and the fold position.

As shown in FIG. 5, FIG. 7, and FIG. 9, four first meshing teeth 4301 are provided, and the four first meshing teeth 4301 are arranged along a direction substantially parallel to the first direction D1 (i.e., arranged along a vertical direction). Correspondingly, four second meshing teeth 321 are provided, and the four second meshing teeth 321 can pivot relative to the first connecting pin 34a. Referring to FIG. 4 and FIG. 5, when the support assembly 3 is at the unfold position, the second meshing teeth 321 at a side edge mesh with the first meshing teeth 4301 at the bottom, so that the support assembly 3 cannot further pivot in a direction away from the second pillar 12 relative to the support seat 1. Referring to FIG. 8 and FIG. 9, when the support assembly 3 is at the fold position, the second meshing teeth 321 at another side edge mesh with the first meshing teeth 4301 at the top, so that the support assembly 3 cannot further pivot in a direction close to the second pillar 12 relative to the support seat 1. In other words, through meshing between the plurality of first meshing teeth 4301 and the plurality of second meshing teeth 321, the maximum angle (i.e., the unfold position of the support assembly 3 is defined) and the minimum angle (i.e., the fold position of the support assembly 3 is defined) between the support assembly 3 and the support seat 1 can be defined.

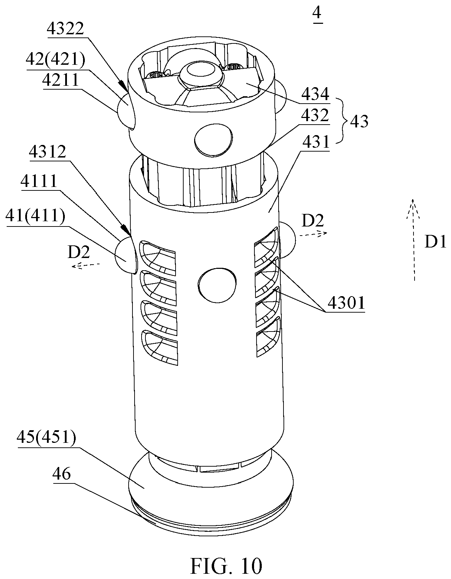

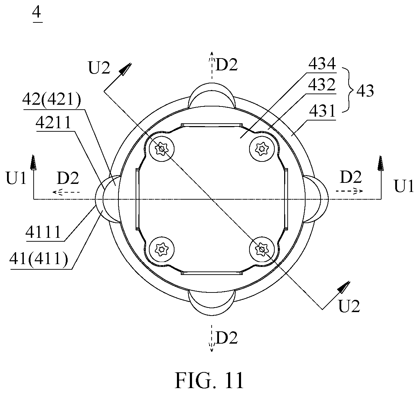

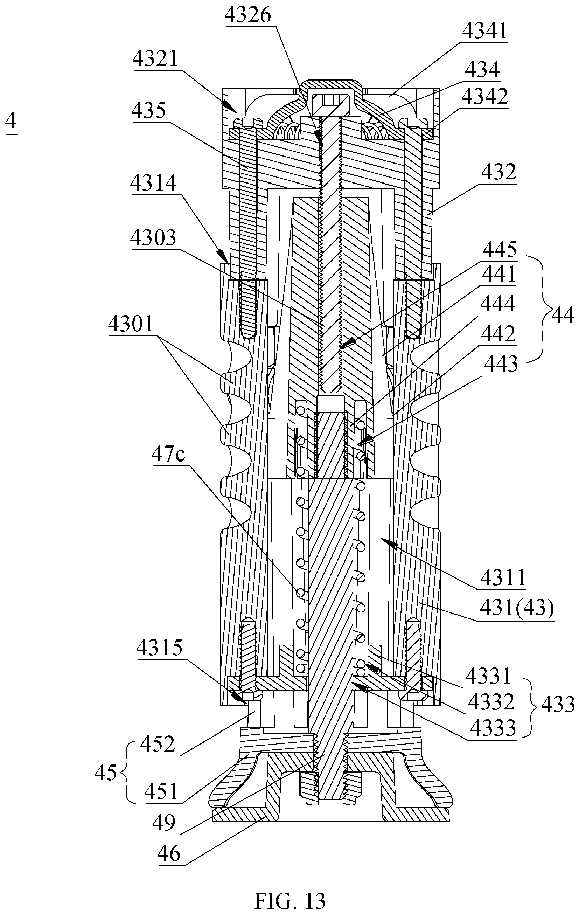

As shown in FIG. 10 to FIG. 14, the movable seat 43 includes a first base 431, a second base 432, a first cover body 433, and a second cover body 434. The first base 431 is substantially in a shape of a pillar. The first base 431 is provided with a first receiving cavity 4311. The first receiving cavity 4311 has a first open end 4315 and a second open end 4314. The first cover body 433 is detachably connected to the first base 431 and closes at least part of the first open end 4315 of the first receiving cavity 4311. The first cover body 433 is provided with a penetration recess 4334 to allow the operating member 45 to extend into the first receiving cavity 4311 through the penetration recess 4333 when the first cover body 433 is connected to the first base 431. The first base 431 is provided with a first penetration hole 4312. The first penetration hole 4312 passes through a side wall of the first receiving cavity 4311. The first locking member 41 is movably arranged in the first receiving cavity 4311. The first engaging end 4111 of the first locking member 41 can pass through the first penetration hole 4312 and extend out of the first receiving cavity 4311 to allow the first engaging end 411 to be engaged with the engaging hole 112 (refer to FIG. 5).

Still referring to FIG. 10 to FIG. 14, the second base 432 is detachably connected to the first base 431. Specifically, the second base 432 is inserted into the second open end 4314 of the first receiving cavity 4311, and is detachably connected to the first base 431 through, for example, a bolt connecting member 435. In other embodiments, the second base 431 may alternatively be detachably connected to the first base 431 by a threaded connection, clamping, or the like. The first base 431 is provided with a first limiting portion 4313. The first limiting portion 4313 is connected to an inner side wall of the first receiving cavity 4311. The second base 432 is provided with a second limiting portion 4325. The second limiting portion 4325, the first limiting portion 4313, and the side wall of the first receiving cavity 4311 define a limiting recess 4302. The limiting recess 4302 is configured to accommodate at least part of the first locking member 41. The side wall of the first receiving cavity 4311 forms a bottom wall of the limiting recess 4302. The limiting recess 4302 is adjacent to the first penetration hole 4312 and is formed in the first receiving cavity 4311. Specifically, the limiting recess 4302 is located above the first penetration hole 4312, one side of the first limiting portion 4313 forms an inner side wall of the limiting recess 4302, and the other side of the first limiting portion 4313 is in continuous transition to at least part of a hole wall of the first penetration hole 4312. In this way, a movement direction of the first locking member 41 relative to the movable seat 43 can be better defined.

Further, the second base 432 is provided with a second receiving cavity 4324. The second receiving cavity 4324 is in communication with the first receiving cavity 4311. The driving member 44 is movably arranged in the first receiving cavity 4311 and the second receiving cavity 4324. The second base 432 is provided with a receiving groove 4321 and a second penetration hole 4322. The second penetration hole 4322 passes through a side wall of the receiving groove 4321. The second locking member 42 is movably arranged in the receiving groove 4321. The second engaging end 4211 of the second locking member 42 can at least partially pass through the second penetration hole 4322 and extend out of the receiving groove 4321 to allow the second engaging end 4211 to be engaged with the engaging hole 112 (refer to FIG. 9). The second cover body 434 is detachably connected to the second base 432 and closes at least part of a notch of the receiving groove 4321, so that the second locking member 42 can be at least partially limited in the receiving groove 4321.

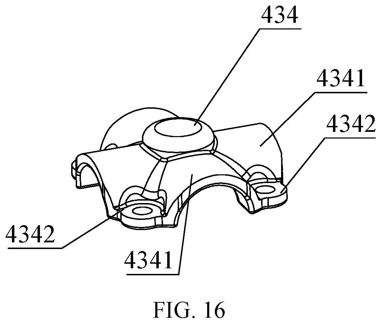

Referring to FIG. 16 together, the second cover body 434 includes a covering portion 4341 and a cover body connecting portion 4342. The covering portion 4341 is provided above and covers the second locking member 42 and is configured to limit at least part of the second locking member 42 in the receiving groove 4321. The cover body connecting portion 4342 is arranged on two sides of the covering portion 4341 and can fit a bottom wall of the receiving groove 4321. The covering portion 4341 is substantially in a shape of an arc and a middle portion of the covering portion 4341 protrudes from the cover body connecting portion 4342. The cover body connecting portion 4342 is detachably connected to the bottom wall of the receiving groove 4321 through a threaded connecting member. In this way, the second locking member 42 can be easily mounted in the receiving groove 4321 of the second base 432.

In this embodiment, referring to FIG. 10, four first locking members 41 are provided, the four first locking members 41 are evenly distributed along a circumferential direction of the first base 431, and the first base 431 is correspondingly provided with four first penetration holes 4312. The support seat 1 is correspondingly provided with four engaging holes 112. The four engaging holes 112 are evenly distributed along a circumferential direction of the support seat 1, and are spaced apart from the four support assemblies 3 in the circumferential direction of the support seat 1 (that is, spaced apart from the four meshing holes 113). Four second locking members 42 are provided, the four second locking members 42 are evenly distributed along a circumferential direction of the second base 432, and the second base 432 is correspondingly provided with four second penetration holes 4312. In this embodiment, the second cover body 434 is correspondingly provided with four covering portions 4341 and four cover body connecting portions 4342, and four covering portions 4341 and four cover body connecting portions 4342 are spaced apart. An angle between two adjacent covering portions 4341 is approximately 90° and an angle between two adjacent cover body connecting portions 4342 is approximately 90° In other embodiments, the number of the first locking member 41 may be, for example, one, two, or other integer numbers, the number of the second locking member 42 may be, for example, one, two, or other integer numbers, and the number of the engaging hole 112 may also be correspondingly set to one, two, or other integer numbers according to a position and the number of the first locking member 41 and a position and the number of the second locking member 42, which are not limited in the present disclosure. For ease of description, a structure on the left (refer to FIG. 4 to FIG. 10) of the support seat 1 is taken as an example below for illustration.

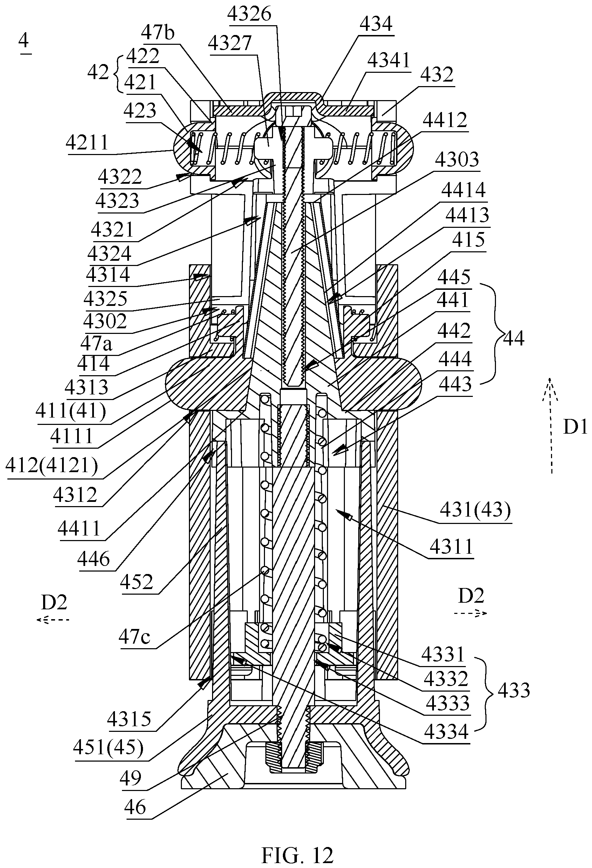

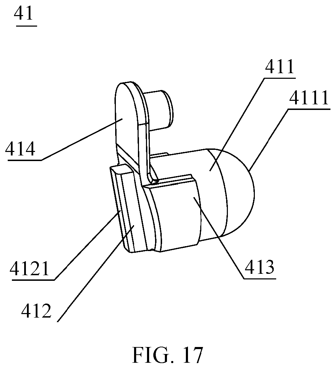

As shown in FIG. 12, in some embodiments, the first locking member 41 is movably arranged in the first receiving cavity 4311. Referring to FIG. 5 and FIG. 9 together, the first locking member 41 can switch between a first lock position and a first unlock position. When the first locking member 41 is at the first lock position, the first engaging end 4111 passes through the first penetration hole 4312 and extends out of the first receiving cavity 4311, to allow the first engaging end 4111 to be engaged with the engaging hole 112. When the first locking member 41 is at the first unlock position, the first engaging end 4111 retreats into the first penetration hole 4312, to allow the first engaging end 4111 to be disengaged from the engaging hole 112. Referring to FIG. 17 together, the first locking member 41 includes a first bayonet portion 411. The first bayonet portion 411 is substantially in a shape of a pin. The first bayonet portion 411 is arranged through the first penetration hole 4312 and can move along a direction substantially parallel to a second direction D2. The second direction D2 refers to an outward direction parallel to a radial direction of the movable seat 43, and the second direction D2 is not parallel to the first direction D 1. In this embodiment, the second direction D2 is substantially perpendicular to the first direction D1. The first engaging end 4111 is formed at one end of the first bayonet portion 411. The first engaging end 4111 has an arc-shaped end surface, so that the first engaging end 4111 can penetrate into and engage with the engaging hole 112. The other end of the first bayonet portion 411 is drivingly connected to the driving member 44. An outer side surface of the first bayonet portion 411 is provided with a first limiting protrusion 413. The first limiting protrusion 413 can abut against an end surface of the first penetration hole 4312 to limit at least part of the first locking member 41 in the first receiving cavity 4311.

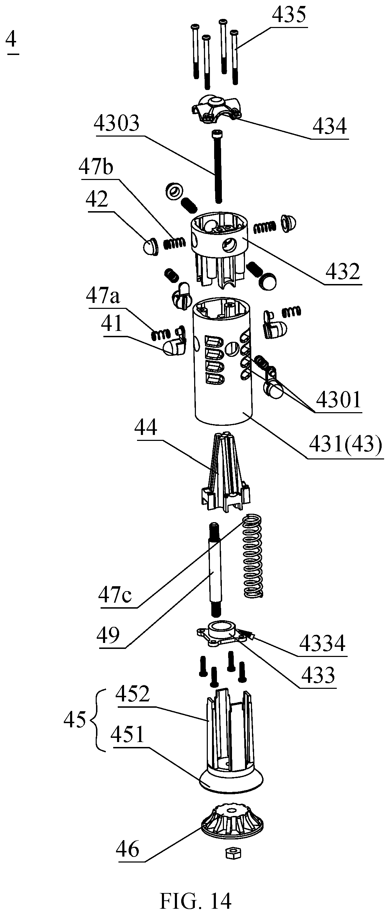

Referring to FIG. 12 and FIG. 14, the unfold and fold mechanism 4 further includes a first reset member 47a, and the first reset member 47a is arranged between the movable seat 43 and the first locking member 41 to bias the first locking member 41 and cause the first locking member 41 to move towards the first unlock position where the first engaging end 4111 exits the engaging hole 112. Specifically, the first locking member 41 is provided with an abutting portion 414, and the abutting portion 414 is connected to an outer side surface of the first bayonet portion 411. The abutting portion 414 is at least partially accommodated in the limiting recess 4302. The first reset member 47a is, for example, a compressed spring. The first reset member 47a is accommodated in the limiting recess 4302. Moreover, one end of the first reset member 47a abuts against a bottom wall of the limiting recess 4302, and the other end of the first reset member 47a abuts against the abutting portion 414. Referring to FIG. 5 together, when the first locking member 41 is at the first lock position, the first reset member 47a is in a compressed energy storage state, and the first engaging end 4111 passes through the first penetration hole 4312 to engage with the engaging hole 112. Referring to FIG. 9 together, when the first locking member 41 is at the first unlock position, the first reset member 47a is in a natural elongation state or in a compressed energy storage state to a lesser extent, and the first engaging end 4111 exits the engaging hole 112 and retreats into the first penetration hole 4312 to allow the movable seat 4 to move between the first position and the second position relative to the support seat 1. Further, when the movable seat 4 is at the first position, the first penetration hole 4312 is aligned with the engaging hole 112, and the first locking member 41 can switch between the first lock position and the first unlock position. Therefore, when the first locking member 41 is not pushed or a pushing force against the first locking member 414 is reduced, an elastic restoring force of first reset member 47a can push against the abutting portion 414 to drive the first locking member 41 to move towards the first unlock position along a direction opposite to the second direction D2. When the movable seat 4 is at the second position, the first reset member 47a biases the abutting portion 414 of the first locking member 41, so that the first locking member 41 is held at the first unlock position. At the same time, the second engaging end 4211 of the second locking member 42 is engaged with the engaging hole 112.

In this embodiment, in order to prevent deflection of the first reset member 47a during compression and energy storage, the abutting portion 414 is provided with a first abutting boss 415. One end of the first reset member 47a abuts against a bottom wall of the limiting recess 4302, and the other end of the first reset member 47a sleeves the first abutting boss 415.

As shown in FIG. 12 and FIG. 14, the second locking member 42 is movably arranged in the receiving groove 4321. Referring to FIG. 5 and FIG. 9 together, the second locking member 42 can switch between a second lock position and a second unlock position. When the second locking member 42 is at the second lock position, the second engaging end 4211 passes through the second penetration hole 4312 and extends out of the second receiving cavity 4311, to allow the second engaging end 4211 to be engaged with the engaging hole 112. When the second locking member 42 is at the second unlock position, the second engaging end 4211 retreats into the second penetration hole 4322, to allow the second engaging end 4211 to be disengaged from the engaging hole 112. Further, the second locking member 42 includes a second bayonet portion 421 and a second limiting protrusion 422, the second bayonet portion 421 is substantially in a shape of a pin, and the second engaging end 4211 is formed at one end of the second bayonet portion 421. The second bayonet portion 421 is arranged through the second penetration hole 4322 and can move relative to the second base 432 in a direction parallel to the second direction D2, and the second engaging end 4211 can pass through the second penetration hole 4322 and extend out of the receiving groove 4321 to allow the second engaging end 4211 to be engaged with the engaging hole 112. The second limiting protrusion 422 is arranged on an outer side surface of the second bayonet portion 421, and the second limiting protrusion 422 can be stopped by an end surface of the second penetration hole 4322, to limit at least part of the second locking member 42 in the receiving groove 4321. Specifically, the second limiting protrusion 422 is arranged at an end of the second bayonet portion 421 away from the second engaging end 4211 and is accommodated in the receiving groove 4321.

Referring to FIG. 12 and FIG. 14, the unfold and fold mechanism 4 further includes a second reset member 47b. The second reset member 47b is, for example, a compressed spring. The receiving groove 4321 of the second base 432 is provided with a connecting protrusion 4323, the second reset member 47b is arranged between the second locking member 42 and the connecting protrusion 4323, and the second reset member 47b is adapted to bias the second locking member 42 to cause the second locking member 42 to move towards the second lock position. Further, when the movable seat 43 is at the second position, the first locking member 41 is at the first unlock position, the second penetration hole 4322 is aligned with the engaging hole 112, and the second locking member 42 moves from the second unlock position to the second lock position relative to the second base 432 along the second direction D2 under an elastic restoring force of the second reset member 47b, so that the second engaging end 4211 of the second locking member 42 can be engaged with the first engaging hole 112. In this embodiment, the second engaging end 4211 has an arc-shaped end surface. When the movable seat 43 moves from the second position to the first position, an end portion of the engaging hole 112 can push against the arc-shaped end surface of the second engaging end 4211, to allow the second engaging end 4211 to exit the engaging hole 112 and be stopped by the side wall of the accommodating cavity 111, so that the movable seat 43 can move along the first direction D1 (i.e., upwards) relative to the support seat 1, thereby driving the support assembly 3 to switch from the fold position to the unfold position. With this arrangement, the support assembly 3 can be unfolded without directly operating (for example, pressing) the second locking member 42, which improves convenience of operating the support device 100.

In this embodiment, in order to prevent deflection of the second reset member 47b during the biasing, the second locking member 42 is provided with an abutting recess 423, a side surface of the connecting protrusion 4323 facing the second locking member 42 is provided with a second abutting boss 4327, one end of the second reset member 47b is accommodated in the abutting recess 423 and abuts against a bottom wall of the abutting recess 423, and the other end of the second reset member 47b sleeves the second abutting boss 4327 and abuts against the connecting protrusion 4323.

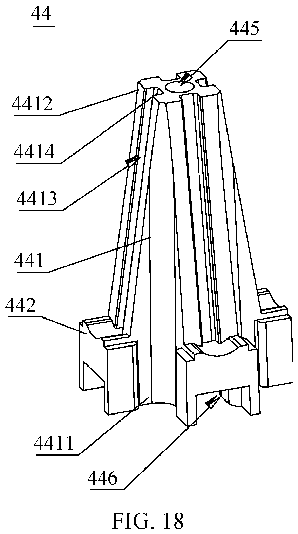

As shown in FIG. 5, FIG. 7, and FIG. 9, the driving member 44 is movably arranged in the first receiving cavity 4311 and the second receiving cavity 4324. The operating member 45 is at least partially accommodated in the first receiving cavity 4311 and is detachably connected to the driving member 44. When the operating member 45 is operated along a direction parallel to the first direction D1, the driving member 44 can be driven to move between the first drive position and the second drive position relative to the movable seat 43, and the movable seat 43 can be driven, through the driving member 44, to move between the first position and the second position. Referring to FIG. 18 together, in some embodiments, the driving member 44 includes a driving main body 441 and a limiting boss 442, the driving main body 441 has a first end portion 4411 and a second end portion 4412, an outer contour of the driving main body 441 gradually diminishes from the first end portion 4411 to the second end portion 4412, and the limiting boss 442 is arranged on the first end portion 4411 of the driving main body 441. Specifically, the outer contour of the driving main body 441 is substantially in a shape of a cone. More specifically, the outer contour of the driving main body 441 is substantially in a shape of a truncated cone. The limiting boss 442 is arranged on an outer side surface of the first end portion 4411. In this embodiment, the driving member 44 is an integrally formed component.

As shown in FIG. 5, FIG. 7, FIG. 9, and FIG. 18, the driving main body 441 of the driving member 44 is provided with a driving recess 4413, and the driving recess 4413 extends from the second end portion 4412 to the first end portion 4411. An extension direction of the driving recess 4413 is not parallel to either the first direction D1 or the second direction D2. An end of the first locking member 41 away from the first engaging end 4111 is provided with a driving protrusion 412. A first driving bevel 4121 is formed on a side surface of the driving protrusion 412. A second driving bevel 4414 is formed on a bottom wall of the driving recess 4413. The driving protrusion 412 is engaged with the driving recess 4413 and can move along an extension direction of the driving recess 4413. The first driving bevel 4121 abuts against the second driving bevel 4414 and can slide relative to the first driving bevel 4121, to allow the first locking member 41 to be movable between the first lock position and the first unlock position along the second direction D2 relative to the movable seat 43 when the driving member 44 moves along the first direction D1 relative to the movable seat 43.

In another embodiment, the driving main body 441 is provided with a driving protrusion 412, and a first driving bevel 4121 is formed on a side surface of the driving protrusion 412. The end of the first locking member 41 away from the first engaging end 4111 is provided with the driving recess 4413, the second driving bevel 4414 is formed on the bottom wall of the driving recess 4413, and the driving recess 4413 is engaged with the driving protrusion 412 and can move along an extension direction of the driving protrusion 412. In other embodiments not shown, alternatively, the first driving bevel 4121 is formed on a side surface of the driving main body 441, the second driving bevel 4414 is formed at the end of the first locking member 41 away from the first engaging end 411, and the first driving bevel 4121 abuts against the second driving bevel 4414 and can slide relative to the first driving bevel 4121.

As shown in FIG. 5, when the driving member 44 is at the first drive position, the first end portion 4411 of the driving main body 441 pushes against the first locking member 41, so that the first engaging end 4111 of the first locking member 41 can pass through the first penetration hole 4312 and be engaged with the engaging hole 112 (that is, the first locking member 41 is pushed to the first lock position by the first end portion 4411). The movable seat 43 is held at the first position, so that the support assembly 3 is held at the unfold position. Specifically, when the driving member 44 is at the first drive position, the driving protrusion 412 of the first locking member 41 is at least partially engaged with the driving recess 4413 of the driving member 44, and the first driving bevel 4121 abuts against the second driving bevel 4414. Further, when the driving member 44 is at the first drive position, a side surface of the first locking member 41 abuts against the limiting boss 442, to prevent detachment of the first locking member 41 from the driving member 44. Furthermore, when the driving member 44 is at the first drive position, the second end portion 4412 of the driving member 44 abuts against a top wall of the second receiving cavity 4324.

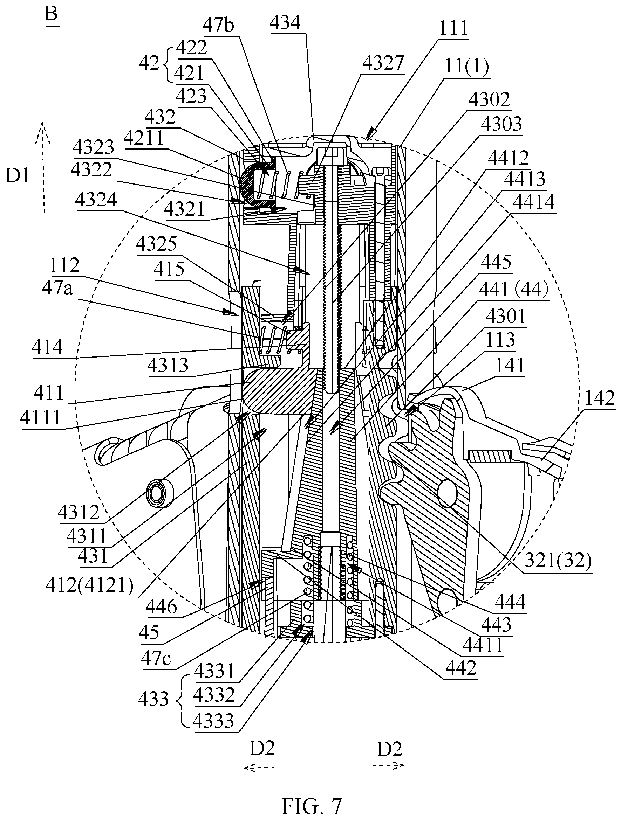

Referring to FIG. 7 together, when the driving member 44 moves from the first drive position to the second drive position along a direction opposite to the first direction D1 relative to the movable seat 43, the first locking member 41 moves from the first lock position to the first unlock position along the direction opposite to the second direction D2 relative to the movable seat 43 under the elastic restoring force of the first reset member 47a, so that the first driving bevel 4121 abuts against the second driving bevel 4414 and the driving protrusion 412 slides along the driving recess 4413 towards the second end portion 4412.

As shown in FIG. 7 and FIG. 9, when the driving member 44 moves to the second drive position, the second end portion 4412 of the driving main body 441 abuts against the first locking member 41, so that the first locking member 41 moves to and is held at the first unlock position (that is, the first engaging end 4111 exits the engaging hole 112 and retreats into the first penetration hole 4312). In this case, the driving member 44 is driven to move relative to the support seat 1 by operating the operating member 45, thereby driving the movable seat 43 to move between the first position and the second position relative to the support seat 1.

Referring to FIG. 7, when the driving member 44 is at the second drive position and the movable seat 43 is at the first position, the driving member 44 abuts against the first cover body 433 of the movable seat 43 to drive the movable seat 43 to move from the first position to the second position along the direction opposite to the first direction D1 relative to the support seat 1. Specifically, the operating member 45 is operated along a direction opposite to the first direction D1 so as to drive the driving member 4 to move along the direction opposite to the first direction D1 relative to the support seat 1, and then the first cover body 43 is pushed, through the driving member 4, to drive the movable seat 43 to move from the first position to the second position along the direction opposite to the first direction D1 relative to the support seat 1, thereby switching the support assembly 3 from the unfold position to the fold position. With this arrangement, when the support assembly 3 is at the unfold position, the driving member 44 is at the first drive position, and the first end portion 4411 of the driving member 44 abuts against the first locking member 41 so that the first locking member 41 is held at the first lock position, thereby limiting the movement of the movable seat 43 relative to the support seat 1 and locking the support assembly 3 at the unfold position. In other words, when the operating member 45 is not operated, the support assembly 3 is locked at the unfold position, thereby preventing accidental switching from the unfold position to the fold position when the support assembly 3 is supported on the ground or the platform. Therefore, stability of the support of the support device is improved.

Referring to FIG. 9, when the driving member 44 is at the second drive position and the movable seat 43 moves to the second position, the second locking member 42 is at the second lock position for engaging with the engaging hole 112, the first locking member 41 is at the first unlock position and is accommodated in the first receiving cavity 4311, and the first engaging end 4111 of the first locking member 41 can be stopped by the side wall of the first receiving cavity 4311. The second driving bevel 4414 of the driving member 44 abuts against the first driving bevel 4121 of the first locking member 41, to allow the driving member 44, when moving along the first direction D1 relative to the support seat 1, to drive the first locking member 41 to move relative to the support seat 1, thereby driving the movable seat 43 to move along the first direction D1 relative to the support seat 1.

As shown in FIG. 18, in some embodiments, the driving member 44 is provided with a guide hole 445, and the guide hole 445 extends from the second end portion 4412 of the driving main body 441 to the first end portion 4411 along a direction substantially parallel to the first direction D1. The movable seat 43 is provided with a guide member 4303, and the guide member 4303 is at least partially accommodated in the second receiving cavity 4324. The guide member 4303 extends along a direction substantially parallel to the first direction D1. The guide member 4303 is inserted into the guide hole 445 and can move along the guide hole 445, to guide the guide member 4303 to move substantially along the first direction D1 relative to the movable seat 43, thereby preventing deflection of the guide member 4303 during the movement. In this embodiment, the guide member 4303 is detachably connected to the second base 432, and the guide member 4303 is, for example, a bolt. The second base 432 is provided with a threaded hole 4326, and the threaded hole 4326 is in communication with the second receiving cavity 4324 and the receiving groove 4321. The guide member 4303 is in a threaded connection with the threaded hole 4326, and part of the guide member 4303 extends into the second receiving cavity 4324. In this embodiment, part of the guide member 4303 extends into the first receiving cavity 4311.

As shown in FIG. 5, FIG. 12, and FIG. 14, in some embodiments, the unfold and fold mechanism 4 further includes a driving reset member 47c, and the driving reset member 47c is arranged between the first cover body 433 and the driving member 44 to bias the driving member 44 to cause the driving member 44 to move towards the first drive position. The driving reset member 47c is, for example, a compressed spring. Specifically, an end of the driving member 44 facing the first cover body 433 (i.e., the first end portion 4411 of the driving member 44) is provided with a limiting slot 443, and the limiting slot 443 is provided with a limiting post 444. The first cover body 433 has a boss portion 4331, and the boss portion 4331 is provided with a limiting groove 4332. One end of the driving reset member 47c sleeves the limiting post 444, and the other end of the driving reset member 47c is inserted into the limiting groove 4332. With this arrangement, deflection of the driving reset member 47c during the compression can be prevented.

As shown in FIG. 12 to FIG. 14, in some embodiments, the operating member 45 is operably inserted into the first receiving cavity 4311, and is detachably connected to the driving member 44 through a first connecting member 49. The operating member 45 includes an operating portion 451 and an operating connecting portion 452 connected to the operating portion 451. The first cover body 433 is provided with a connecting perforation 4333. One end of the first connecting member 49 is detachably connected to the operating member 45, and the other end of the first connecting member 49 passes through the connecting perforation 4333 and is detachably connected to the driving member 44. In this embodiment, the first connecting member 49 is, for example, a screw, and two ends of the screw each are provided with threads. The operating portion 451 is in a threaded connection with the first connecting member 49. At least part of the operating portion 451 is located outside the first receiving cavity 4311 and the accommodating cavity 111, to facilitate operating the operating member 45. Specifically, when the support device 100 is in the second state in which the support assembly 3 is held at the fold position, the operating portion 45 is located outside the first receiving cavity 4311. When the support device 100 is in the first state in which the support assembly 3 is held at the unfold position, a side of the operating portion 45 connected to the operating connecting portion 452 can abut against an end surface of the first open end 4315 of the accommodating cavity 111. The operating connecting portion 452 extends into the first receiving cavity 4311 through the penetration recess 4334. The driving member 44 has an insertion recess 446. The insertion recess 446 is arranged on the limiting boss 442. The operating connecting portion 452 can extend into the first receiving cavity 4311 through the penetration recess 4334 and be insert-fitted with the insertion recess 446. With this arrangement, on the one hand, connection and positioning of the operating member 45 can be realized, and on the other hand, stability of the connection between the driving member 44 and the operating member 45 can be improved, so that the operating member 45 and the driving member 44 move along a direction substantially parallel to the first direction D1, thereby preventing shaking of the operating member 45 when being operated.

Further, the operating member 45 is provided with a gasket 46, and the gasket 46 is arranged on a side of the operating portion 451 away from the operating connecting portion 452. The gasket 46 may be detachably connected to the operating member 45 through clamping or a threaded connection. The gasket 46 may alternatively be fixedly connected to the operating member 45 by bonding or the like. In this embodiment, the gasket 46 is detachably connected to the first connecting member 49. Specifically, the gasket 46 and the operating member 45 are connected to a same end of the first connecting member 49. A side of the gasket 46 facing away from the operating member 45 is flat, to facilitate pressing or pushing of the gasket 46. The gasket 46 is made of plastic, for example.

Operating steps and principles of the support device 100 according to some embodiments of the present disclosure are described in detail below.

As shown in FIG. 5, when the support device 100 is at the unfold position, the support assembly 3 is at the unfold position, and the unfold and fold mechanism 4 is in the first state. The movable seat 43 is at the first position, the first penetration hole 4312 of the movable seat 43 faces the engaging hole 112 of the support seat 1, the driving member 33 is at the first drive position, and the first end portion 4411 of the driving member 33 abuts against the first locking member 41, so that the first locking member 41 is pushed and is held at the first lock position (i.e., the first engaging end 4111 extends out of the first penetration hole 4312 and is engaged with the engaging hole 112). In this case, the second locking member 42 is accommodated in the first receiving cavity 4311, and the second engaging end 4211 is stopped by the side wall of the first receiving cavity 4311.

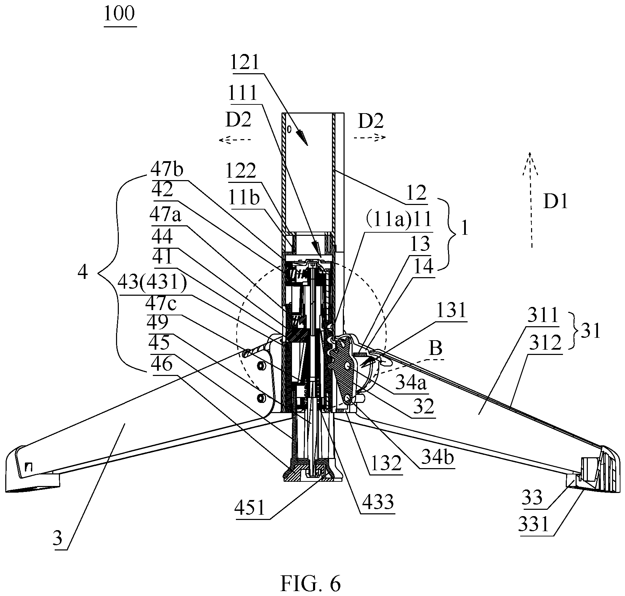

When there is a need to fold the support device 100 (i.e., switch the support device 100 to the fold position), referring to FIG. 4 to FIG. 7, the operating member 45 is pulled along a direction opposite to the first direction D1 (downwards), to drive the driving member 44 to move from the first drive position to the second drive position along the direction opposite to the first direction D1. In this process, the first locking member 41 moves along a direction opposite to the second direction D2 relative to the movable seat 43 under the elastic restoring force of the first reset member 47a and moves from the first end portion 4411 to the second portion 4412 along the driving recess 412 relative to the driving member 44, so that the first engaging end 4111 of the first locking member 41 exits the engaging hole 112 and the first locking member 41 moves from the first lock position to and is held at the first unlock position, thereby allowing the movable seat 43 to move relative to the support seat 1. Referring to FIG. 6 to FIG. 9, the operating member 45 is further pulled along the direction opposite to the first direction D1, and may push against, through the driving member 44, the first cover body 433 to drive the movable seat 43 to move from the first position to the second position along the direction opposite to the first direction D1 relative to the support seat 1. During the movement of the movable seat 43 relative to the support seat 1, the support assembly 3 is driven to pivot from the unfold position to the fold position along a counterclockwise direction through the meshing of the first meshing teeth 4301 with the second meshing teeth 321.

Referring to FIG. 8 to FIG. 9, when the support assembly 3 pivots to the fold position, the support assembly 3 cannot further pivot along the counterclockwise direction, so that the movable seat 43 cannot further move along the direction opposite to the first direction D1 relative to the support seat 1, thereby holding the movable seat 43 at the second position. In this case, the driving member 44 is at the second drive position, the first locking member 41 abuts against the second end portion 4412 of the driving member 44 and is accommodated in the first receiving cavity 4311, and the first locking member 41 can be stopped by the side wall of the first receiving cavity 4311. The second penetration hole 4322 of the movable seat 43 is aligned with the engaging hole 112, and under the elastic restoring force of the second reset member 47b, the second engaging end 4211 of the second locking member 42 extends out of the second penetration hole 4322 and is engaged with the engaging hole 112 (i.e., the second locking member 42 is at the second lock position), so that the support assembly 3 is held at the fold position. Therefore, the switching of the support device 100 from the unfold position to the fold position is realized.

In short, the support device 100 can be folded by pulling the operating member 45 downwards.

When there is a need to unfold the support device 100 (i.e., switch the support device 100 from the fold position to the unfold position), the unfolding may be realized in either of the following two methods or a combination thereof.

### Method 1:

Referring to FIG. 6 to FIG. 9, the support assembly 3 on the right is taken as an example for illustration. Any support assembly 3 is pivoted in a clockwise direction (away from the second post 12), so that the support assembly 3 pivots from the fold position to the unfold position. The second engaging end 4211 of the second locking member 42 is pushed by the end portion of the engaging hole 112 to cause the second engaging end 4211 to exit the engaging hole 112, thereby allowing the movable seat 43 to move relative to the support seat 1. At the same time, the movable seat 43 is driven to move from the second position to the first position through meshing of the first meshing teeth 4301 with the second meshing teeth 321.

Referring to FIG. 6 to FIG. 7, when the support assembly 3 pivots to the unfold position, the support assembly 3 cannot further pivot along the clockwise direction relative to the support seat 1, so that the movable seat 43 cannot continue to move along the first direction D1 relative to the support seat 1, thereby holding the movable seat 43 at the first position. At the same time, the second locking member 42 is accommodated in the first receiving cavity 4311, and the second engaging end 4211 is stopped by the side wall of the first receiving cavity 4311. The first penetration hole 4312 is aligned with the engaging hole 112, the driving member 44 is at the second drive position, and the first locking member 41 is at the first unlock position.

Referring to FIG. 4 to FIG. 5 together, under an elastic restoring force of the driving reset member 47c, the driving member 44 drives the operating member 45 to move together from the second drive position to the first drive position relative to the movable seat 43, so that the driving protrusion 412 of the first locking member 41 slides from the second end portion 4412 to the first end portion 4411 along the driving recess 4413 relative to the driving member 44 and the first locking member 41 moves from the first unlock position to the first lock position relative to the movable seat 43. That is, under the elastic restoring force of the driving reset member 47c, the first engaging end 4111 of the first locking member 41 passes through the first penetration hole 4312 and engages with the engaging hole 112, thereby locking the support assembly 3 to the unfold position, so that the support device 100 is switched from the fold position to and locked to the unfold position.

### Method 2:

Referring to FIG. 6 to FIG. 9, the operating member 45 (or the gasket 46) is pressed along the first direction D1 (upwards), and the second engaging end 4211 of the second locking member 42 is pushed by the end portion of the engaging hole 112 to cause the second engaging end 4211 to exit the engaging hole 112, thereby allowing the movable seat 43 to move relative to the support seat 1. At the same time, the driving member 44 abuts against the second driving bevel 4414 through the first driving bevel 4121 to drive the first locking member 41 to move along the first direction D1, thereby driving, through the first bayonet portion 411 arranged through the first penetration hole 4312, the movable seat 43 to move along the first direction D1 relative to the support seat 1. During the movement of the movable seat 43, the support assembly 3 is driven to pivot from the fold position to the unfold position along a direction away from the second post 12 through the meshing of the first meshing teeth 4301 with the second meshing teeth 321.

Referring to FIG. 6 and FIG. 7, when the operating member 45 is pressed to cause the support assembly 3 to pivot to the unfold position, the support assembly 3 cannot further pivot along the direction away from the second post 12 relative to the support seat 1, and the movable seat 43 is held at the first position. In this case, the second locking member 42 is accommodated in the first receiving cavity 4311, and the second engaging end 4211 is stopped by the side wall of the first receiving cavity 4311. The first penetration hole 4312 is aligned with the engaging hole 112, the driving member 44 is at the second drive position, and the first locking member 41 is at the first unlock position.

In this case, the operating member 45 can no longer be pressed upwards. Referring to FIG. 4 to FIG. 5, under the elastic restoring force of the driving reset member 47c, the driving member 44 drives the operating member 45 to together move from the second drive position to the first drive position relative to the movable seat 43, so that the driving protrusion 412 of the first locking member 41 slides from the second end portion 4412 to the first end portion 4411 along the driving recess 4413 relative to the driving member 44 and the first locking member 41 moves from the first unlock position to the first lock position relative to the movable seat 43. That is, under the elastic restoring force of the driving reset member 47c, the first engaging end 4111 of the first locking member 41 passes through the first penetration hole 4312 and engages with the engaging hole 112, thereby locking the support assembly 3 to the unfold position, so that the support device 100 is switched from the fold position to and locked to the unfold position. Certainly, in this case, alternatively, the operating member 45 is further pressed upwards to drive the driving member 44 to move from the second drive position to the first drive position relative to the movable seat 3, thereby driving the first engaging end 4111 of the first locking member 41 to pass through the first penetration hole 4312 and engage with the engaging hole 112, so that the support device 100 is switched from the fold position to and locked to the unfold position.

In short, the support device 100 can be folded by pressing the operating member 45 upwards or pivoting the support assembly 3.

According to the support device 100 and the artificial tree provided with the support device 100 provided in embodiments of the present disclosure, the unfold and fold mechanism 4 thereof is movably arranged on the support seat 1 and is drivingly connected to the support assembly 3, so that, the unfold and fold mechanism 4 can switch between the first state and the second state when moving relative to the support seat 1, thereby driving the support assembly 3 to pivot between the unfold position and the fold position. Further, when the unfold and fold mechanism is in the first state, the support assembly 3 is held at the unfold position, so that the support assembly 3 can be firmly supported on the ground or a platform. When the unfold and fold mechanism is in the second state, the support assembly 3 is held at the fold position, which reduces a space occupied by the support device 100 to facilitate storage or transportation of the support device 100. The support device 100 can be easily unfolded and folded to meet use requirements for the support device 100 in different scenarios.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present disclosure, and their description is specific and detailed, but cannot therefore be understood as a limitation on the patent scope of the invention. It should be noted that those of ordinary skill in the art may further make variations and improvements without departing from the conception of the present disclosure, and these all fall within the protection scope of the present disclosure. Therefore, the patent protection scope of the present disclosure should be subject to the appended claims.

The present disclosure may be summarised by the following clauses:
1. A foldable support device, comprising:
   a support seat provided with an accommodating cavity and a mounting portion configured to mount a supported object, the accommodating cavity extending along a direction parallel to a first direction, an outer side surface of the support seat being provided with a pivot portion;
   a support assembly pivotally connected to the pivot portion and having an unfold position and a fold position; and
   an unfold and fold mechanism drivingly connected to the support assembly, the unfold and fold mechanism being at least partially accommodated in the accommodating cavity and being movable along the first direction,
   wherein the unfold and fold mechanism is capable of switching between a first state and a second state to drive the support assembly to switch between the unfold position and the fold position, when the unfold and fold mechanism is in the first state, the support assembly is held at the unfold position, and when the unfold and fold mechanism is in the second state, the support assembly is held at the fold position.
2. The support device according to clause 1, wherein the support seat is provided with an engaging hole, the engaging hole passing through a side wall of the accommodating cavity, and the unfold and fold mechanism comprises:
   a movable seat drivingly connected to the support assembly, the movable seat being movably arranged in the accommodating cavity and having a first position and a second position;
   a first locking member having a first engaging end, the first locking member being movably arranged on the movable seat and having a first lock position allowing the first engaging end to be engaged with the engaging hole and a first unlock position allowing the first engaging end to be disengaged from the engaging hole; and
   a second locking member having a second engaging end, the second locking member being movably arranged on the movable seat and having a second lock position allowing the second engaging end to be engaged with the engaging hole and a second unlock position allowing the second engaging end to be disengaged from the engaging hole;
   when the movable seat is at the first position, the unfold and fold mechanism is in the first state, and the first locking member is at the first lock position to allow the support assembly to be held at the unfold position; and when the movable seat is at the second position, the unfold and fold mechanism is in the second state, and the second locking member is at the second lock position to allow the support assembly to be held at the fold position.
3. The support device according to clause 2, wherein the movable seat is provided with a f irst receiving cavity, the first receiving cavity having a first open end, the first open end b eing provided with a first cover body, the first cover body closing at least part of the first open end, and the unfold and fold mechanism further includes:
   a driving member at least partially accommodated in the first receiving cavity and movable along a direction parallel to the first direction relative to the movable seat, the driving member having a first drive position and a second drive position;
   wherein, when the driving member is at the first drive position, the first engaging end of the first locking member is capable of being engaged with the engaging hole, so that the movable seat is held at the first position, and the support assembly is held at the unfold position; and when the driving member is at the second drive position, the driving member is capable of driving, through the first locking member, the movable seat to move from the second position to the first position, and is capable of pushing against the first cover body to drive the movable seat to move from the first position to the second position.
4. The support device according to clause 3, wherein the movable seat is provided with a f irst penetration hole, the first penetration hole passing through a side wall of the first recei ving cavity, and the first locking member is arranged through the first penetration hole an d is movable along a direction parallel to a second direction relative to the movabl e seat, wherein the second direction is not parallel to the first direction, and
   one of the first locking member and the driving member is provided with a first driving bevel, and the other of the first locking member and the driving member is provided with a second driving bevel, the second driving bevel abutting against the first driving bevel and being slidable relative to the first driving bevel to allow the first locking member to be movable between the first lock position and the first unlock position along the second direction relative to the movable seat when the driving member moves along the first direction relative to the movable seat.
5. The support device according to clause 4, wherein one of an end of the first locking me mber away from the first engaging end and a side surface of the driving member is provid ed with a driving protrusion, the first driving bevel being formed on the side surfac e of the driving protrusion;
   the other of the end of the first locking member away from the first engaging end and the side surface of the driving member is provided with a driving recess, an extension direction of the driving recess is not parallel to either the first direction or the second direction, and the second driving bevel is formed on a bottom wall of the driving recess; and
   the driving protrusion being engaged with the driving recess and movable along the extension direction of the driving recess.
6. The support device according to clause 4, wherein the first locking member comprises a pin-shaped first bayonet portion, the first engaging end is formed at one end of the first bayonet portion, and an outer side surface of the first bayonet portion is provided with a first limiting protrusion, the first limiting protrusion being capable of abutting against an end face of the first penetration hole to limit at least part of the first locking member in the first receiving cavity.
7. The support device according to clause 3, wherein the driving member comprises a driving main body and a limiting boss, the driving main body having a first end portion an d a second end portion and gradually diminishing from the first end portion to the se cond end portion, the limiting boss being arranged on the first end portion of the dri ving main body, and the driving member is movable between the first drive position and th e second drive position relative to the movable seat, and
   when the movable seat is at the first drive position, an end of the first locking member away from the first engaging end abuts against a side surface of the first end portion, and a side surface of the first locking member is capable of being stopped by the limiting boss; and when the movable seat is at the second drive position, the end of the first locking member away from the first engaging end abuts against a side surface of the second end portion, and the first end portion abuts against the first cover body.
8. The support device according to clause 3, wherein the unfold and fold mechanism further comprises:
   a first reset member arranged between the first locking member and the movable seat, the first reset member being adapted to bias the first locking member to cause the first locking member to move towards the first unlock position.
9. The support device according to clause 8, wherein the first locking member comprises a first bayonet portion and an abutting portion, and the first engaging end is formed at one end of the first bayonet portion, the abutting portion being connected to an outer side surface of the first bayonet portion,
   the movable seat is provided with a first penetration hole and a limiting recess, the first penetration hole passing through a side wall of the first receiving cavity, the limiting recess being adjacent to the first penetration hole and located in the first receiving cavity, the first bayonet portion being inserted into the first penetration hole, and the abutting portion being at least partially accommodated in the limiting recess, and
   one end of the first reset member abuts against a bottom wall of the limiting recess, and the other end of the first reset member abuts against the abutting portion.
10. The support device according to clause 3, wherein the unfold and fold mechanis m further comprises:
   an operating member operably arranged on the movable seat and detachably connected to the driving member through a first connecting member.
11. The support device according to clause 10, wherein the first cover body is provided wi th a connecting perforation and a penetration recess, the operating member has an op erating portion, the operating portion being located outside the first receiving cavity, and a t least part of the operating member is capable of extending into the first receiving cavity t hrough the penetration recess, and
   one end of the first connecting member is detachably connected to the operating member, and the other end of the first connecting member passes through the connecting perforation and is detachably connected to the driving member.
12. The support device according to clause 11, wherein the operating member is provided with a gasket, the gasket being arranged on the operating portion.
13. The support device according to clause 3, wherein the unfold and fold mechanis m further comprises a driving reset member, the driving reset member being arrang ed between the first cover body and the driving member to bias the driving member to cau se the driving member to move towards the first drive position.
14. The support device according to clause 13, wherein an end of the driving membe r facing the first cover body is provided with a limiting slot, the limiting slot bein g provided with a limiting post, and the first cover body has a boss portion, the boss portio n being provided with a limiting groove, and
   one end of the driving reset member sleeves the limiting post, and the other end of the driving reset member is inserted into the limiting groove.
15. The support device according to clause 3, wherein the driving member is provided with a guide hole, an extension direction of the guide hole is parallel to the first direction, and the movable seat is provided with a guide member, the guide member extending along a direction parallel to the first direction, and the guide member being inserted into t he guide hole and movable along the guide hole.
16. The support device according to clause 2, wherein the movable seat comprises:
   a first base provided with a first receiving cavity, and the first locking member is movably arranged on the first base; and
   a second base detachably connected to the first base, the second base being provided with a second receiving cavity, the second receiving cavity being in communication with the first receiving cavity, and the second locking member is movably arranged on the second base.
17. The support device according to clause 16, wherein the second base is provided with a receiving groove and a second penetration hole, the second penetration hole passing through a side wall of the receiving groove, and an open end of the receiving groove is provided with a second cover body, the second cover body being detachably connected to the second base, and
   the second locking member is movably arranged in the receiving groove and the second engaging end is capable of at least partially passing through the second penetration hole and extending out of the receiving groove, to allow the second engaging end to be engaged with the engaging hole.
18. The support device according to clause 17, wherein the second locking membe r comprises a second bayonet portion and a second limiting protrusion, the second bayone t portion being in a shape of a pin, and one end of the second bayonet portion forms the se cond engaging end, the second limiting protrusion being arranged on an outer side s urface of the second bayonet portion, and
   the second limiting protrusion is capable of being stopped by an end face of the second penetration hole, to limit at least part of the second locking member in the receiving groove.
19. The support device according to clause 17, wherein the receiving groove is provided with a connecting protrusion, and the unfold and fold mechanism further comprises:
   a second reset member, the second reset member being arranged between the second locking member and the connecting protrusion, and the second reset member being adapted to bias the second locking member to cause the second locking member to move towards the second lock position.
20. The support device according to clause 1, wherein the unfold and fold mechanis m comprises:
   a movable seat at least partially accommodated in the accommodating cavity and movable along a direction parallel to the first direction relative to the support seat, the movable seat being provided with a plurality of first meshing teeth,
   the support assembly is provided with a plurality of second meshing teeth, and the support seat is provided with a meshing hole, the meshing hole passing through a side wall of the accommodating cavity, and
   when the movable seat moves along the direction parallel to the first direction relative to the support seat, the first meshing teeth are capable of meshing with the second meshing teeth through the meshing hole to drive the support assembly to pivot between the unfold position and the fold position.
21. The support device according to clause 20, wherein the plurality of first meshing teeth are distributed on an outer side surface of the movable seat along a direction parallel to th e first direction.
22. The support device according to clause 20, wherein the support assembly comprises: a gear plate provided with the plurality of second meshing teeth and pivotally connected to t he pivot portion, the plurality of second meshing teeth meshing with the plurality of first meshing teeth; and
   a support body connected to the gear plate.
23. The support device according to clause 22, wherein the pivot portion is provided with a retaining groove, the retaining groove being in communication with the meshing hole, a nd at least part of the gear plate is accommodated in the retaining groove and is pivotally c onnected to the pivot portion.
24. The support device according to clause 23, wherein the pivot portion is provided with a decorative member;
   one of the decorative member and the support body is provided with an engaging protrusion, and the other of the decorative member and the support body is provided with an engaging recess, and
   when the support assembly is at the fold position, the engaging protrusion is engaged with the engaging recess.
25. The support device according to clause 24, wherein the pivot portion is provided with a first pivot limiting portion, and when the support assembly is at the unfold position, at le ast part of the support assembly abuts against the first pivot limiting portion, and
   the decorative member is provided with a second pivot limiting portion, and when the support assembly is at the fold position, at least part of the support assembly abuts against the second pivot limiting portion.
26. The support device according to clause 22, wherein the support assembly furthe r comprises a pad having a support surface, the pad being detachably arranged at an end of the support body away from the gear plate.
27. The support device according to any one of clauses 1 to 26, wherein at least tw o support assemblies are provided, the support seat is provided with at least two piv ot portions, and the at least two support assemblies are respectively pivotally connected to the at least two pivot portions.
28. An artificial tree, comprising a tree body and the support device according to any one of clauses 1 to 27, the tree body serving as the supported object and being mounted on the mounting portion.

## Claims

1. A foldable support device, comprising:
a support seat provided with an accommodating cavity and a mounting portion configured to mount a supported object, the accommodating cavity extending along a direction parallel to a first direction, an outer side surface of the support seat being provided with a pivot portion;
a support assembly pivotally connected to the pivot portion and having an unfold position and a fold position; and
an unfold and fold mechanism drivingly connected to the support assembly, the unfold and fold mechanism being at least partially accommodated in the accommodating cavity and being movable along the first direction,
wherein the unfold and fold mechanism is capable of switching between a first state and a second state to drive the support assembly to switch between the unfold position and the fold position, when the unfold and fold mechanism is in the first state, the support assembly is held at the unfold position, and when the unfold and fold mechanism is in the second state, the support assembly is held at the fold position.

2. The support device according to claim 1, wherein the support seat is provided with an engaging hole, the engaging hole passing through a side wall of the accommodating cavity, and the unfold and fold mechanism comprises:
a movable seat drivingly connected to the support assembly, the movable seat being movably arranged in the accommodating cavity and having a first position and a second position;
a first locking member having a first engaging end, the first locking member being movably arranged on the movable seat and having a first lock position allowing the first engaging end to be engaged with the engaging hole and a first unlock position allowing the first engaging end to be disengaged from the engaging hole; and
a second locking member having a second engaging end, the second locking member being movably arranged on the movable seat and having a second lock position allowing the second engaging end to be engaged with the engaging hole and a second unlock position allowing the second engaging end to be disengaged from the engaging hole; when the movable seat is at the first position, the unfold and fold mechanism is in the first state, and the first locking member is at the first lock position to allow the support assembly to be held at the unfold position; and when the movable seat is at the second position, the unfold and fold mechanism is in the second state, and the second locking member is at the second lock position to allow the support assembly to be held at the fold position.

3. The support device according to claim 2, wherein the movable seat is provided with a first receiving cavity, the first receiving cavity having a first open end, the first open end being provided with a first cover body, the first cover body closing at least part of the first open end, and the unfold and fold mechanism further includes:
a driving member at least partially accommodated in the first receiving cavity and movable along a direction parallel to the first direction relative to the movable seat, the driving member having a first drive position and a second drive position;
wherein, when the driving member is at the first drive position, the first engaging end of the first locking member is capable of being engaged with the engaging hole, so that the movable seat is held at the first position, and the support assembly is held at the unfold position; and when the driving member is at the second drive position, the driving member is capable of driving, through the first locking member, the movable seat to move from the second position to the first position, and is capable of pushing against the first cover body to drive the movable seat to move from the first position to the second position.

4. The support device according to claim 3, wherein the movable seat is provided with a first penetration hole, the first penetration hole passing through a side wall of the first receiving cavity, and the first locking member is arranged through the first penetration hole and is movable along a direction parallel to a second direction relative to the movable seat, wherein the second direction is not parallel to the first direction, and
one of the first locking member and the driving member is provided with a first driving bevel, and the other of the first locking member and the driving member is provided with a second driving bevel, the second driving bevel abutting against the first driving bevel and being slidable relative to the first driving bevel to allow the first locking member to be movable between the first lock position and the first unlock position along the second direction relative to the movable seat when the driving member moves along the first direction relative to the movable seat;
optionally, wherein one of an end of the first locking member away from the first engaging end and a side surface of the driving member is provided with a driving protrusion, the first driving bevel being formed on the side surface of the driving protrusion; the other of the end of the first locking member away from the first engaging end and the side surface of the driving member is provided with a driving recess, an extension direction of the driving recess is not parallel to either the first direction or the second direction, and the second driving bevel is formed on a bottom wall of the driving recess; and the driving protrusion being engaged with the driving recess and movable along the extension direction of the driving recess;
and/or, wherein the first locking member comprises a pin-shaped first bayonet portion, the first engaging end is formed at one end of the first bayonet portion, and an outer side surface of the first bayonet portion is provided with a first limiting protrusion, the first limiting protrusion being capable of abutting against an end face of the first penetration hole to limit at least part of the first locking member in the first receiving cavity.

5. The support device according to claim 3, wherein the driving member comprises a driving main body and a limiting boss, the driving main body having a first end portion and a second end portion and gradually diminishing from the first end portion to the second end portion, the limiting boss being arranged on the first end portion of the driving main body, and the driving member is movable between the first drive position and the second drive position relative to the movable seat, and
when the movable seat is at the first drive position, an end of the first locking member away from the first engaging end abuts against a side surface of the first end portion, and a side surface of the first locking member is capable of being stopped by the limiting boss; and when the movable seat is at the second drive position, the end of the first locking member away from the first engaging end abuts against a side surface of the second end portion, and the first end portion abuts against the first cover body.

6. The support device according to claim 3, wherein the unfold and fold mechanism further comprises:
a first reset member arranged between the first locking member and the movable seat, the first reset member being adapted to bias the first locking member to cause the first locking member to move towards the first unlock position;
optionally, wherein the first locking member comprises a first bayonet portion and an abutting portion, and the first engaging end is formed at one end of the first bayonet portion, the abutting portion being connected to an outer side surface of the first bayonet portion, the movable seat is provided with a first penetration hole and a limiting recess, the first penetration hole passing through a side wall of the first receiving cavity, the limiting recess being adjacent to the first penetration hole and located in the first receiving cavity, the first bayonet portion being inserted into the first penetration hole, and the abutting portion being at least partially accommodated in the limiting recess, and one end of the first reset member abuts against a bottom wall of the limiting recess, and the other end of the first reset member abuts against the abutting portion.

7. The support device according to claim 3, wherein the unfold and fold mechanism further comprises:
an operating member operably arranged on the movable seat and detachably connected to the driving member through a first connecting member;
optionally, wherein the first cover body is provided with a connecting perforation and a penetration recess, the operating member has an operating portion, the operating portion being located outside the first receiving cavity, and at least part of the operating member is capable of extending into the first receiving cavity through the penetration recess, and one end of the first connecting member is detachably connected to the operating member, and the other end of the first connecting member passes through the connecting perforation and is detachably connected to the driving member;
optionally, wherein the operating member is provided with a gasket, the gasket being arranged on the operating portion.

8. The support device according to claim 3, wherein the unfold and fold mechanism further comprises a driving reset member, the driving reset member being arranged between the first cover body and the driving member to bias the driving member to cause the driving member to move towards the first drive position;
optionally, wherein an end of the driving member facing the first cover body is provided with a limiting slot, the limiting slot being provided with a limiting post, and the first cover body has a boss portion, the boss portion being provided with a limiting groove, and one end of the driving reset member sleeves the limiting post, and the other end of the driving reset member is inserted into the limiting groove.

9. The support device according to claim 3, wherein the driving member is provided with a guide hole, an extension direction of the guide hole is parallel to the first direction, and the movable seat is provided with a guide member, the guide member extending along a direction parallel to the first direction, and the guide member being inserted into the guide hole and movable along the guide hole.

10. The support device according to claim 2, wherein the movable seat comprises:
a first base provided with a first receiving cavity, and the first locking member is movably arranged on the first base; and
a second base detachably connected to the first base, the second base being provided with a second receiving cavity, the second receiving cavity being in communication with the first receiving cavity, and the second locking member is movably arranged on the second base;
optionally, wherein the second base is provided with a receiving groove and a second penetration hole, the second penetration hole passing through a side wall of the receiving groove, and an open end of the receiving groove is provided with a second cover body, the second cover body being detachably connected to the second base, and the second locking member is movably arranged in the receiving groove and the second engaging end is capable of at least partially passing through the second penetration hole and extending out of the receiving groove, to allow the second engaging end to be engaged with the engaging hole;
optionally, wherein the second locking member comprises a second bayonet portion and a second limiting protrusion, the second bayonet portion being in a shape of a pin, and one end of the second bayonet portion forms the second engaging end, the second limiting protrusion being arranged on an outer side surface of the second bayonet portion, and the second limiting protrusion is capable of being stopped by an end face of the second penetration hole, to limit at least part of the second locking member in the receiving groove;
and/or, wherein the receiving groove is provided with a connecting protrusion, and the unfold and fold mechanism further comprises: a second reset member, the second reset member being arranged between the second locking member and the connecting protrusion, and the second reset member being adapted to bias the second locking member to cause the second locking member to move towards the second lock position.

11. The support device according to claim 1, wherein the unfold and fold mechanism comprises:
a movable seat at least partially accommodated in the accommodating cavity and movable along a direction parallel to the first direction relative to the support seat, the movable seat being provided with a plurality of first meshing teeth,
the support assembly is provided with a plurality of second meshing teeth, and the support seat is provided with a meshing hole, the meshing hole passing through a side wall of the accommodating cavity, and
when the movable seat moves along the direction parallel to the first direction relative to the support seat, the first meshing teeth are capable of meshing with the second meshing teeth through the meshing hole to drive the support assembly to pivot between the unfold position and the fold position;
optionally, wherein the plurality of first meshing teeth are distributed on an outer side surface of the movable seat along a direction parallel to the first direction.

12. The support device according to claim 11, wherein the support assembly comprises:
a gear plate provided with the plurality of second meshing teeth and pivotally connected
to the pivot portion, the plurality of second meshing teeth meshing with the plurality of first meshing teeth; and
a support body connected to the gear plate;
optionally, wherein the pivot portion is provided with a retaining groove, the retaining groove being in communication with the meshing hole, and at least part of the gear plate is accommodated in the retaining groove and is pivotally connected to the pivot portion;
optionally, wherein the pivot portion is provided with a decorative member; one of the decorative member and the support body is provided with an engaging protrusion, and the other of the decorative member and the support body is provided with an engaging recess, and when the support assembly is at the fold position, the engaging protrusion is engaged with the engaging recess;
optionally, wherein the pivot portion is provided with a first pivot limiting portion, and when the support assembly is at the unfold position, at least part of the support assembly abuts against the first pivot limiting portion, and the decorative member is provided with a second pivot limiting portion, and when the support assembly is at the fold position, at least part of the support assembly abuts against the second pivot limiting portion.

13. The support device according to claim 12, wherein the support assembly further comprises a pad having a support surface, the pad being detachably arranged at an end of the support body away from the gear plate.

14. The support device according to any one of claims 1 to 13, wherein at least two support assemblies are provided, the support seat is provided with at least two pivot portions, and the at least two support assemblies are respectively pivotally connected to the at least two pivot portions.

15. An artificial tree, comprising a tree body and the support device according to any one of claims 1 to 14, the tree body serving as the supported object and being mounted on the mounting portion.
